# FASCICULE DE BREVET EUROPEEN

(11) **EP 2 077 918 B1**
(45) Date de publication et mention de la délivrance du brevet: **17.05.2017**
(21) Numéro de dépôt: 07858430.7
(22) Date de dépôt: 12.10.2007
(51) Int. Cl.: B05D 7/14, C09D 5/44

(54) **PROCÉDÉ DE FORMATION DE FILMS ORGANIQUES SUR DES SURFACES CONDUCTRICES OU SEMI-CONDUCTRICES DE L'ÉLECTRICITÉ À PARTIR DE SOLUTIONS AQUEUSES EN DEUX ÉTAPES.**
AUS ZWEI SCHRITTEN BESTEHENDES VERFAHREN ZUM BILDEN VON ORGANISCHEN FILMEN AUF ELEKTRISCH LEITENDEN OBERFLÄCHEN AUS WÄSSRIGEN LÖSUNGEN
TWO-STEP METHOD FOR FORMING ORGANIC FILMS ON ELECTRICALLY CONDUCTING SURFACES FROM AQUEOUS SOLUTIONS

(30) Priorité: 12.10.2006 FR 0608945
(43) Date de publication de la demande: 15.07.2009
(73) Titulaire: Commissariat à l'Energie Atomique, 75015 Paris (FR)
(72) Inventeur: DENIAU, Guy, 78610 Auffargis (FR)
(74) Mandataire: Cabinet Plasseraud
(86) Numéro de dépôt international: PCT/FR2007/001666
(87) Numéro de publication internationale: WO 2008/043918

(56) Documents cités:
- WO-A-03/080748
- CH-A5- 623 608
- FR-A- 2 871 162
- FR-A1- 2 860 523
- US-A- 4 191 676

## Description

La présente Invention concerne le domaine des revêtements de surface, lesdits revêtements étant sous la forme de films organiques. Elle est plus particulièrement relative à un procédé de formation de films organiques copolymériques par greffage électrochimique sur des surfaces conductrices ou semiconductrices de l'électricité à partir de solutions aqueuses de précurseurs convenablement sélectionnées afin de permettre la formation simple et reproductible de ces films organiques, aux surfaces obtenues en mettant en oeuvre ce procédé et à leurs applications notamment pour la préparation de composants microélectroniques, de dispositifs biomédicaux ou de kits de criblage, à des kits pour la mise en oeuvre du procédé.

A l'heure actuelle, il existe plusieurs techniques permettant la réalisation de films organiques minces sur des substrats, chacune reposant sur une famille ou une classe de molécules adaptée.

Le procédé de formation d'un revêtement par centrifugation connu sous l'appellation anglaise de "*spin coating*" ou les techniques apparentées -de formation de revêtements par immersion ("dip coating") ou de dépôt par vaporisation ("spray coating") ne requièrent pas d'affinité particulière entre les molécules déposées et le substrat d'intérêt. En effet, la cohésion du film déposé repose essentiellement sur les interactions entre les constituants du film qui peut par exemple être réticulé après dépôt pour en améliorer la stabilité. Ces techniques sont très versatiles, applicables à tous types de surfaces à couvrir, et très reproductibles. Cependant, elles ne permettent aucun greffage effectif entre le film et le substrat (il s'agit d'une simple physisorption), et les épaisseurs produites sont mal contrôlables notamment pour les dépôts les plus fins (inférieurs à 20 nanomètres). De plus, les techniques de " spin coating " ne permettent des dépôts uniformes que lorsque la surface à recouvrir est essentiellement plane. La qualité des films obtenus par les techniques de "spray coating" est liée au mouillage des surfaces par le liquide pulvérisé, puisque le dépôt ne devient essentiellement filmogène que lorsque les gouttes coalescent. Ainsi, pour un polymère donné, il n'existe généralement qu'un ou deux solvants organiques capables de donner des résultats satisfaisants en termes de contrôle de l'épaisseur et de l'homogénéité du dépôt.

D'autres techniques de formation d'un revêtement organique à la surface d'un support, telles que le dépôt par plasma décrit par exemple dans les articles de Konuma M., "Film déposition by plasma techniques", (1992) Springer Verlag, Berlin, et de Biederman H. et Osada Y., "Plasma polymerization processes", 1992, Elsevier, Amsterdam, ou bien l'activation photochimique reposent sur un même principe : générer à proximité de la surface à couvrir des formes instables d'un précurseur, qui évoluent en formant un film sur le substrat. Si le dépôt par plasma ne requiert aucune propriété particulière de ses précurseurs, la photo-activation nécessite quant à elle l'utilisation de précurseurs photosensibles, dont la structure évolue sous l'influence d'une irradiation lumineuse. Ces techniques donnent en général lieu à la formation de films adhérents, bien qu'il soit le plus souvent impossible de discerner si cette adhésion est due à une réticulation d'un film topologiquement fermé autour de l'objet ou à une réelle formation de liaisons à l'interface.

L'auto-assemblage de monocouches est une technique très simple à mettre en oeuvre (Ulman A., "An introduction to ultrathin organic films from Langmuir-Blodgett films to self-assembly", 1991, Boston, Academic Press). Cette technique requiert toutefois l'utilisation de précurseurs généralement moléculaires possédant une affinité suffisante pour la surface d'intérêt à revêtir. On parlera alors de couple précurseur-surface, tels les composés soufrés ayant une affinité pour l'or ou l'argent, les tri-halogéno silanes pour les oxydes comme la silice ou l'alumine, les polyaromatiques pour le graphite ou les nanotubes de carbone. Dans tous les cas, la formation du film repose sur une réaction chimique spécifique entre une partie du précurseur moléculaire (l'atome de soufre dans le cas des thiols par exemple) et certains sites "récepteurs" de la surface. Une réaction de chimisorption assure l'accrochage. On obtient ainsi, à température ambiante et en solution des films d'épaisseur moléculaire (moins de 10 nm). Cependant, si les couples impliquant des surfaces d'oxyde donnent lieu à la formation de films très solidement greffés (la liaison Si-O impliquée dans la chimisorption de tri-halogéno silanes sur silice est parmi les plus stables de la chimie), il n'en est rien lorsque l'on s'intéresse aux métaux ou aux semi-conducteurs sans oxyde. Dans ces cas, la liaison d'interface entre la surface conductrice et le film monomoléculaire est fragile. Ainsi, les monocouches auto-assemblées de thiols sur or désorbent dès qu'on les chauffe au-dessus de 60°C, ou en présence d'un bon solvant à température ambiante, ou encore dès qu'elles sont mises en contact avec un milieu liquide oxydant ou réducteur. De façon semblable, les liaisons Si-O-Si sont fragilisées dès qu'elles se trouvent en milieu aqueux voire humide, en particulier sous l'effet de la chaleur.

L'électrogreffage de polymères est une technique basée sur l'initiation puis la polymérisation, par propagation en chaîne électro-induite, de monomères électro-actifs sur la surface d'intérêt jouant à la fois le rôle d'électrode et celui d'amorceur de polymérisation (S. Palacin et al, "Molecule-to-metal bonds : electrografting polymers on conducting surfaces.", ChemPhvsChem, 2004, 10, 1468). L'électrogreffage requiert l'utilisation de précurseurs adaptés à son mécanisme d'initiation par réduction et de propagation, en général anionique, car on préfère souvent l'électrogreffage initié cathodiquement, applicable sur les métaux nobles et non nobles (contrairement à l'électrogreffage par polarisation anodique qui n'est applicable que sur des substrats nobles). Les molécules "vinyliques appauvries", c'est-à-dire porteuses de groupements fonctionnels électro-attracteurs, comme les acrylonitriles, les acrylates, les vinyl-pyridines, etc... sont particulièrement adaptées à ce procédé qui donne lieu à de nombreuses applications dans le domaine de la microélectronique ou du biomédical. L'adhérence des films électrogreffés est assurée par une liaison covalente de type carbone-métal (G. Deniau et al., "Carbon-to-metal bounds: electrochemical réduction of 2-butenenitrile", Surface Science, 2006, 600, 675-684).

Selon cette technique d'électrogreffage, la polymérisation est indispensable à la formation de la liaison d'interface carbone/métal : il a été en effet montré (G. Deniau et al, "Coupled chemistry revisited in the tentative cathodic electropolymerization of 2-butenenitriîe." , Journal of Electroanalytical Chemistry, 1998, 451, 145-161) que le mécanisme de l'électrogreffage procède par une électroréduction du monomère sur la surface, pour donner un radical anion instable, qui, s'il n'était pas au milieu de molécules polymérisables, désorberait pour retourner en solution (*op. cit.*). A côté de cette réaction de désorption, la réaction d'addition (de type addition de Michaël) de la charge du premier radical anion chimisorbé sur un monomère libre offre un second moyen de stabiliser l'intermédiaire réactionnel : le produit de cette addition donne à nouveau un radical anion, où la charge s'est cependant "éloignée" de la surface, ce qui contribue à stabiliser l'édifice adsorbé. Ce radical anion dimérique peut lui-même à nouveau s'additionner à un monomère libre, et ainsi de suite : chaque nouvelle addition est une stabilité supplémentaire par relaxation de la répulsion charge/surface polarisée, ce qui revient à dire que la liaison d'interface du premier radical anion, temporaire, devient stable à mesure que la polymérisation a lieu. En d'autres termes, il a été avancé qu'un monomère vinylique qui ne peut pas polymériser ne peut pas s'électro-greffer.

Parmi les différentes techniques rappelées précédemment, l'électro greffage est la seule technique qui permette de produire des films greffés avec un contrôle spécifique de la liaison d'interface. De plus, contrairement aux techniques plasma ou photoinduites, l'électrogreffage ne génère ses espèces réactives qu'au voisinage immédiat de la surface d'intérêt (dans la double couche électrochimique, dont l'épaisseur est dans la plupart des cas de quelques nanomètres).

Il semble admis aujourd'hui que l'obtention de films polymères greffés par électrogreffage de monomères vinyliques activés sur des surfaces conductrices de l'électricité procède grâce à une électro-initiation de la réaction de polymérisation à partir de la surface, suivie d'une croissance des chaînes, monomère par monomère. Le mécanisme réactionnel de l'électrogreffage a notamment été décrit dans les articles de C. Bureau et al., Macromolecules, 1997, 30, 333 ; C. Bureau et J. Delhalle, Journal of Surface Analysis, 1999, 6(2), 159 et C. Bureau et al, Journal of Adhésion, 1996, 58, 101.

A titre d'exemple, le mécanisme réactionnel de l'électrogreffage de l'acrylonitrile par polarisation cathodique peut être représenté par le schéma A ci après :

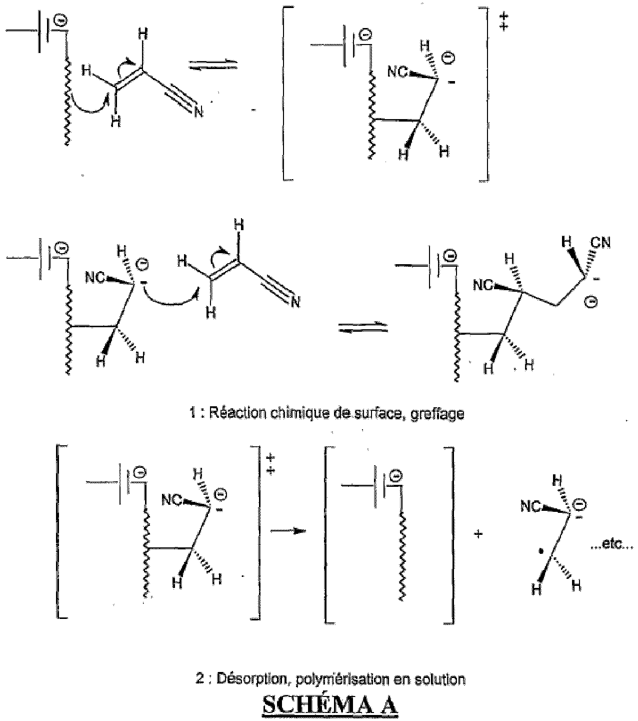

Sur ce schéma, la réaction de greffage correspond à l'étape 1, où la croissance a lieu à partir de la surface. L'étape 2 est la réaction parasite principale, qui conduit à l'obtention d'un polymère non greffé ; cette réaction est limitée par l'emploi de fortes concentrations en monomère.

La croissance des chaînes greffées s'effectue donc par polymérisation purement chimique, c'est-à-dire indépendamment de la polarisation de la surface conductrice qui a donné lieu au greffage. Cette étape est donc sensible à (et est en particulier interrompue par) la présence d'inhibiteurs chimiques de cette croissance, en particulier par les protons.

Sur le schéma A ci-dessus, où l'on a considéré l'électrogreffage de l'acrylonitrile sous polarisation cathodique, la croissance des chaînes greffées s'effectue par polymérisation anionique. Cette croissance est interrompue notamment par des protons, et il a même été démontré que la teneur en protons constitue le paramètre majeur qui pilote la formation de polymère en solution ; les informations obtenues en cours de synthèse, notamment l'allure des voltamogrammes qui accompagnent la synthèse, le montrent (voir en particulier l'article de C. Bureau, Journal of Electroanalytical Chemistry, 1999, 479, 43). Les traces d'eau, et plus généralement les protons labiles des solvants protiques, constituent des sources de protons préjudiciables à la croissance des chaînes greffées.

Globalement, si l'on sait donc réaliser des liaisons chimiques sur des substrats conducteurs ou semi-conducteurs de l'électricité par électrogreffage de différents précurseurs à partir de solutions organiques, il reste difficile d'obtenir, grâce à ces réactions, de tels films à partir de solutions aqueuses car les mécanismes réactionnels sous-jacents (polymérisation de type anionique) ne permettent pas de travailler dans l'eau. Jusqu'à présent, seuls les sels d'aryldiazonium ont permis une approche de solution à ce problème.

Ainsi, comme décrit par exemple dans la demande de brevet français FR- A-2 804 973, l'électrogreffage de précurseurs tels que les sels d'aryldiazonium qui portent une charge positive, peut être réalisé grâce à une réaction de clivage après réduction du cation, pour donner un radical qui se chimisorbe sur la surface. Tout comme pour l'électro greffage des polymères, la réaction d'électro greffage des sels d'aryldiazonium est électro-initiée et conduit à la formation de liaisons chimiques d'interface. A l'inverse des réactions d'électrogreffage de polymères vinyliques, l'électrogreffage des sels d'aryldiazonium n'a pas "besoin" d'une réaction chimique couplée pour stabiliser l'espèce chimisorbée formée suite au transfert de charge, car cette espèce est neutre électriquement, et non chargée négativement comme dans le cas d'un monomère vinylique. Elle- conduit donc - *a priori -* à un adduit surface/groupement aryle stable.

Toutefois, il a été démontré, notamment dans la demande de brevet français FR- A-2 829 046, que les sels d'aryldiazonium conduisent à des films organiques très minces qui peuvent croître sur eux-mêmes : une fois le greffage sur la surface initiale réalisé par réaction d' électro-clivage et chimisorption, le film croît par réaction électro-suivie, à la manière d'un film de polymère conducteur, mais à la cathode. Il en résulte une difficulté à effectuer un contrôle des épaisseurs des films organiques résultant de l'électrogreffage des sels d'aryldiazonium. En revanche, l'association en solution aqueuse d'un sel de diazonium et d'un monomère vinylique peut conduire à la formation d'un film greffé à la condition que le monomère vinylique soit soluble dans l'eau. Cependant, cette méthode d'obtention de films greffés est limitée aux rares monomères vinyliques solubles dans l'eau comme certains acides acryliques, vinyliques hydroxylés ou aminés et conduit généralement à des films de mauvaise qualité (voir l'article de Bell et Zhang, Journal of Applied Polymer Science, 1999, 73, 2265-272).

Les réactions d'électrogreffage actuellement disponibles selon l'art antérieur permettent donc d'obtenir facilement une certaine variété de films organiques sur différents substrats conducteurs et semi-conducteurs à partir de solutions organiques. Néanmoins, il reste à élargir cette gamme afin de répondre à la demande de l'industrie, de diversifier les propriétés d'usage de tels matériaux et donc leurs potentialités d'applications. Par ailleurs, les protocoles utilisés dans l'industrie mettent en oeuvre des solvants organiques qui sont notoirement toxiques et coûteux. Il est donc également souhaitable de proposer de nouveaux procédés moins polluants et plus rentables pour les industriels.

A l'heure actuelle, il n'existe pas de procédé permettant la réalisation de films organiques greffés, de bonne qualité, sur des surfaces conductrices ou semiconductrices de l'électricité, qui puisse facilement être mis en oeuvre en milieu protique, notamment en milieu aqueux, à partir d'une grande variété de monomères polymérisables.

L'inventeur a apporté un début de réponse à ce type de problème dans la demande de brevet français n° 06 01804 déposée le 28 février 2006. La présente invention correspond à un perfectionnement de la précédente avancée technique.

L'inventeur a découvert, de manière surprenante et inattendue, qu'il était possible de réaliser des films organiques copolymériques sur une surface conductrice ou semi-conductrice de l'électricité dans un milieu protique, et particulièrement en milieu aqueux, à partir d'une grande variété de monomères et notamment de monomères vinyliques, de préférence hydrophobes, en deux étapes disctinctes.

L'inventeur a en effet mis au point un procédé de préparation d'un film organique copolymérique sur une surface conductrice ou semi-conductrice de l'électricité en deux étapes. La première étape consistant en l'électrolyse d'une solution électrolytique, comprenant un primaire d'adhésion, au contact de cette surface, et la seconde étape correspondant à la réaction, à la surface préalablement obtenue, d'une solution contenant les espèces suivantes : un solvant protique et un monomère polymérisable par voie radicalaire, ledit procédé étant caractérisé en ce que le monomère polymérisable est solubilisé sous forme micellaire.

L'invention a donc pour premier objet un procédé de formation d'un film organique copolymérique sur une surface conductrice ou semi-conductrice de l'électricité en deux étapes :
(a) électrolyse d'une solution électrolytique renfermant un primaire d'adhésion choisi parmi les sels d'aryle diazonium de formule (I) :

   R-N₂⁺, A⁻ (I)

   dans laquelle :
   - A représente un anion monovalent et
   - R représente un groupe aryle,
   jusqu'à formation d'une couche d'accroche sur la surface, ladite électrolyse étant réalisée à un potentiel de réduction au moins égal au potentiel de réduction du primaire d'adhésion,
(b) réaction, en présence d'un amorceur de polymérisation radicalaire, d'une solution comportant :
   - au moins un solvant protique,
   - au moins un monomère polymérisable par voie radicalaire ayant une solubilité dans ledit au moins un solvant protique inférieure à 0,1M à 25°C et 1.10⁵ Pa,
   - au moins un tensioactif, la concentration en tensioactif étant telle que la concentration micellaire critique (CMC) soit atteinte et qu'il puisse y avoir formation de micelles,
sur la surface obtenue à l'issu de l'étape (a).

Au sens de la présente Invention, on entend par film organique "copolymérique", tout film polymérique issu de plusieurs unités monomériques d'espèces chimiques différentes, et notamment tout film préparé à partir d'au moins un type de monomère polymérisable, particulièrement par voie radicalaire, et d'au moins un type de primaire d'adhésion, également polymérisable.

Au sens de la présente Invention, on entend par "primaire d'adhésion" toute molécule organique susceptible de se chimisorber sur une surface conductrice ou semi-conductrice de l'électricité par réaction électrochimique (greffage électrochimique), et, comportant une fonction réactive vis-à-vis d'un radical carbone après chimisorption. La réaction dont il est ici question est une réaction d'électrogreffage qui conduit à la formation de liaisons covalentes entre la surface et le primaire greffé pour former une couche d'accroche. Le primaire selon l'Invention est choisi parmi les sels d'aryle tels que définis ci-après.

De manière non exhaustive, les surfaces conductrices ou semiconductrices de l'électricité sont choisies parmi l'inox, l'acier, le fer, le cuivre, le nickel, le cobalt, le niobium, l' aluminium, l'argent, le titane, le silicium avec ou sans son oxyde, le nitrure de titane, le tungstène, le nitrure de tungstène, le tantale, le nitrure de tantale et les surfaces métalliques nobles composées par au moins un métal choisi parmi l'or, le platine, l'iridium et le platine iridié. Selon un mode de réalisation préféré de l'invention, la surface employée est une surface d'acier, en particulier d'acier inoxydable tel que par exemple l'acier inoxydable de type 316, de préférence 316L.

La solution électrolytique comporte d'un solvant et peut contenir différents électrolytes. Le solvant de la solution électrolytique est de préférence choisis parmi la diméthylformamide, l'acétate d'éthyle, l'acétonitrile, le diméthylsulfoxyde, tétrahydrofurane, les solvants protiques, ou un mélange de deux ou plusieurs de ces solvants.

Le solvant protique est avantageusement choisi dans le groupe constitué par l'eau, l'acide acétique, les solvants hydroxylés comme le méthanol et l'éthanol, les glycols liquides de faible poids moléculaires tels que l'éthylèneglycol, et leurs mélanges. Selon une forme de réalisation particulière de l'Invention, le solvant protique peut être utilisé en mélange avec un solvant aprotique étant entendu que le mélange résultant présente les caractéristiques d'un solvant protique. L'eau est le solvant protique préféré, il est particulièrement intéressant que l'eau soit distillée ou désionisée.

Il est préférable que le primaire d'adhésion soit soluble dans le solvant utilisé, ledit solvant sera notamment un solvant protique. Au sens de l'Invention un primaire d'adhésion est considéré comme soluble dans un solvant donné s'il demeure soluble jusqu'à une concentration de 0,5 M, *i.e*. que sa solubilité soit au moins égale à 0,5 M, dans les conditions normales de température et de pression. La solubilité est définie comme la composition analytique d'une solution saturée en fonction de la proportion d'un soluté donné dans un solvant donné ; elle peut notamment s'exprimer en molarité. Une solution contenant une concentration donnée de composé sera considérée comme saturée lorsque la concentration sera égale à la solubilité du composé dans ce solvant. Ainsi la solubilité peut être finie comme elle peut être infinie, dans ce dernier cas le composé est soluble en toute proportion dans le solvant considéré.

Les primaires d'adhésion selon l'Invention sont choisis parmi les sels d'aryle diazonium de formule (I) suivante :

R-N₂⁺, A⁻ (I)

dans laquelle :
- A représente un anion monovalent et
- R représente un groupe aryle.

A titre de groupe aryle des composés de formule (I) ci-dessus, on peut notamment citer les structures carbonées aromatiques ou hétéroaromatiques, éventuellement mono- ou polysubstituées, constituées d'un ou plusieurs cycles aromatiques ou hétéroaromatiques comportant chacun de 3 à 8 atomes, le ou les hétéroatomes pouvant être N, O, P ou S. Le ou les substituants peuvent contenir un ou plusieurs hétéroatomes, tels que N, O, F, Cl, P, Si, Br ou S ainsi que des groupes alkyles.

Au sein des composés de formule (I) ci-dessus, A peut notamment être choisi parmi les anions inorganiques tels que les halogénures comme I⁻, Br⁻ et Cl⁻, les halogénoboranes tels que le tetrafluoroborane, et les anions organiques tels que les alcoolates, les carboxylates, les perchlorates et les sulfates.

Au sein des composés de formule (I) ci-dessus, R est de préférence choisi parmi les groupes aryles substitués par des groupements attracteurs d'électrons tels que NO₂, CO, CN, CO₂H, les esters et les halogènes. Les groupes R de type aryle particulièrement préférés sont les radicaux nitrophényle et phényle.

A titre de composés de formule (I), il est particulièrement avantageux d'utiliser le tétrafluoroborate de phényldiazonium, le tétrafluoroborate de 4-nitrophényldiazonium, le tétrafluoroborate de 4-bromophényldiazoriium, le chlorure de 2-méthyl-4-chlorophényldiazonium, le tétrafluoroborate de 4-benzoylbenzènediazonium, le tétrafluoroborate de 4-cyanophényldiazonium, le tétrafluoroborate du 4-carboxyphényldiazonium, le tétrafluoroborate de 4-acétamidophényldiazonium, le tétrafluoroborate de l'acide 4-phénylacétique diazonium, le sulfate de 2-méthyl-4-[(2-méthylphényl)diazényl]benzènediazonium, le chlorure de 9,10-dioxo-9,10-dihydro-1-anthracènediazomum, le tétrafluoroborate de 4-nitronaphtalènediazonium, et le tétrafluoroborate de naphtalènediazonium.

La quantité de primaire d'adhésion présente dans la solution électrolytique utilisée conformément au procédé selon l'Invention peut varier en fonction du souhait de l'expérimentateur. Cette quantité est notamment liée à l'épaisseur de film organique copolymérique désiré ainsi qu'à la quantité de primaire d'adhésion qu'il est souhaitable d'intégrer au film. Ainsi pour obtenir un film greffé sur P ensemble de la surface utilisée, il faut employer une quantité minimale de primaire d'adhésion qu'il est possible d'estimer par des calculs d'encombrement moléculaire. Selon une forme de réalisation particulièrement avantageuse de l'Invention, la concentration en primaire d'adhésion au sein de la solution électrolytique est comprise entre 10⁻⁴ et 0,5 M environ. La couche d'accroche est formée lorsque la surface est recouverte par au moins un film de monomère greffé. Il est bien entendu possible d'employer tout moyen d'analyse pour contrôler la présence de la couche d'accroche et déterminer son épaisseur, de tels moyens peuvent notamment être des mesures de spectrométrie infrarouge ou de spectroscopie de photoélectrons X et UV.

Avantageusement, dans le cas où le primaire d'adhésion est un sel d'aryle diazonium, le pH de la solution électrolytique est inférieur à 7, typiquement inférieur ou égal à 2. Il est recommandé de travailler à un pH compris entre 1,6 et 2,2. Si nécessaire, le pH de la solution électrolytique peut être ajusté à la valeur désirée à l'aide d'un ou plusieurs agents acidifiants bien connus de l'homme du métier, par exemple à l'aide d'acides minéraux ou organiques tels que l'acide chlorhydrique, l'acide sulfurique, etc.

L'électrolyse de la solution électrolytique est de préférence réalisée sous agitation, par exemple sous agitation mécanique et typiquement à l'aide d'un barreau aimanté, ou dans certains cas par barbotage.

Il est par ailleurs préférable que le procédé comporte une étape supplémentaire, préalablement à l'étape d'électrolyse, de nettoyage de la surface sur laquelle on souhaite former le film organique copolymérique, notamment par ponçage et/ou polissage ; un traitement supplémentaire sous ultrasons avec un solvant organique comme l'éthanol, l'acétone ou la diméthylformamide (DMF) est même recommandé. Il est également profitable que le solvant employé soit dégazé avant la mise en oeuvre du procédé ou purgé à l'aide d'un gaz inerte comme l'argon.

Le potentiel appliqué à la solution électrolytique doit correspondre au moins au potentiel de réduction du primaire d'adhésion afin de permettre l'électrolyse qui correspond à l'initiation de la formation de la couche d'accroche.

Typiquement, il n'est pas nécessaire que la solution électrolytique contienne une proportion importante de primaire d'adhésion, en effet, la quantité suffisante théorique correspond à celle nécessaire à la formation d'un film organique, dit "film de primaire" ou encore couche d'accroche, obtenu par greffage du primaire sur l'ensemble de la surface auquel le procédé est appliqué. Afin de garnir l'ensemble de la surface il est nécessaire de fournir une quantité d'électron suffisante pour former une monocouche de primaire d'adhésion. Il est recommandé que le courant appliqué soit de l'ordre du mA.cm⁻², la densité de courant de travail étant de préférence inférieure ou égale à 10⁻⁴ A.cm⁻² environ. Une valeur optimale peut-être estimée à partir du nombre moyen de sites de greffage sur la surface considérée. Il est préférable que le potentiel de travail employé ne soit pas plus cathodique que - 0,6 V/SCE. En effet pour favoriser la réaction de surface, il est avantageux de se placer à une valeur proche du seuil de réduction du composé qui réagira en surface.

L'électrolyse de la solution électrolytique peut-être indépendamment réalisée par polarisation en conditions de voltampérométrie (ou voltamétrie) linéaire ou cyclique, en conditions potentiostatiques, potentiodynamiques, intensiostatiques, galvanostatiques, galvanodynamiques ou par chronoampérométrie simple ou puisée. Avantageusement elle est réalisée par polarisation en conditions de voltampérométrie cyclique. Dans ce cas le nombre de cycles sera compris de manière préférentielle entre 1 et 100 encore plus préférentiellement entre 1 et 10.

L'étape (a) conforme au procédé selon l'nvention peut ainsi notamment être réalisé dans une cellule d'électrolyse comportant trois électrodes : une première électrode de travail constituant la surface destinée à recevoir le film, une contre électrode ainsi qu'une électrode de référence.

Les procédés conduisant à la formation de couche d'accroche par électrogreffage sont connus de l'art antérieur et selon le type de primaire que l'utilisateur souhaite employer il pourra se référer notamment au brevet français n° 2 871 162 ainsi qu'aux demandes précédemment citées.

L'épaisseur du film de primaire peut être contrôlée par la concentration initiale en espèces électroactives, la valeur du potentiel maximum imposé et le temps de polarisation, ce dernier pouvant varier soit directement, c'est le temps d'une électrolyse, soit par le biais d'une vitesse de balayage en voltampérométrie, ou encore par le nombre de balayages dans le cas d'une voltampérométrie cyclique.

Selon un mode de réalisation particulier il est possible d'effectuer un nettoyage de la surface obtenues à l'issu de l'étape (a) avant de procéder à l'étape (b). Le nettoyage est généralement réalisé en lavant la surface à l'aide d'un solvant puis en la séchant. Le lavage est de préférence réalisé avec le solvant employé lors de l'étape (a), un lavage avec le solvant employé à l'étape (b) est également envisageable. Il est aussi possible d'employer un solvant dans lequel le primaire d'adhésion a une solubilité importante, typiquement finie, afin d'éliminer les traces éventuelles de primaire n'ayant pas réagit à la surface. Avantageusement le lavage sera effectué sous ultrasons. Le séchage peut être effectué à l'aide d'un flux gazeux, il est pour cela recommandé d'employer un gaz inerte tel qu'un gaz rare ou l'azote.

Il est possible de conserver les surfaces traitées lors de l'étape (a) durant une période relativement longue avant d'effectuer l'étape (b). La durée maximum correspond à la durée nécessaire pour que la couche d'accroche se dégrade. La durée est bien entendu fonction des conditions extérieures, ainsi dans un milieu agressif pour le type de primaire d'adhésion employé, typiquement des conditions de pH ou de température extrêmes, il est recommandé d'effectuer rapidement l'étape (b). Généralement les surfaces peuvent être conservées plusieurs semaines sous atmosphère ambiante.

Le solvant protique de l'étape (b) est avantageusement choisi dans le groupe constitué par l'eau, l'acide acétique, les solvants hydroxylés comme le méthanol et l'éthanol, les glycols liquides de faible poids moléculaires tels que l'éthylèneglycol, et leurs mélanges. Selon une forme de réalisation particulière de l'Invention, le solvant protique peut être utilisé en mélange avec un solvant aprotique étant entendu que le mélange résultant présente les caractéristiques d'un solvant protique. L'eau est le solvant protique préféré, il est particulièrement intéressant que l'eau soit distillée ou désionisée.

Les monomères polymérisables par voie radicalaire correspondent aux monomères susceptibles de polymériser en condition radicalaire après amorçage par un amorceur. Parmi ces monomères, les monomères vinyliques sont particulièrement concernés, notamment les monomères décrits dans la demande de brevet français n° FR 05 02516 ainsi que dans la demande de brevet français FR-A-2 860 523, délivrée sous le n° FR 03 11491. Les monomères particulièrement concernés sont ceux qui, *a contrario* des composés solubles en toute proportion dans le solvant considéré, sont solubles jusqu'à une certaine proportion dans le solvant, *i.e*. la valeur de leur solubilité dans ce solvant est finie. Selon une forme de réalisation préférée de l'invention, les monomères polymérisables par voie radicalaire sont donc choisis parmi les monomères dont la solubilité dans le solvant protique est finie.

Selon une forme de réalisation particulièrement avantageuse de l'Invention, le ou les monomères vinyliques sont choisis parmi les monomères de formule (II) suivante : 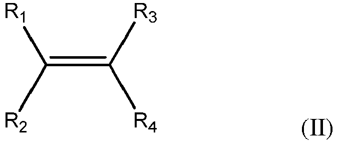 dans laquelle les groupes R₁ à R₄, identiques ou différents, représentent un atome monovalent non métallique tel qu'un atome d'halogène ou un atome d'hydrogène, ou un groupe chimique saturé ou insaturé, tel qu'un groupe alkyle, aryle, un groupe -COOR₅ dans lequel R₅ représente un atome d'hydrogène ou un groupe alkyle en C₁-C₆, nitrile, carbonyle, amine ou amide.

Parmi les composés de formule (II) ci-dessus, on peut en particulier citer l'acétate de vinyle, l'acrylonitrile, le méthacrylonitrile, le méthacrylate de méthyle, le méthacrylate d'éthyle, le méthacrylate de butyle, le méthacrylate de propyle, le méthacrylate d'hydroxyéthyle, le méthacrylate d'hydroxypropyle, le méthacrylate de glycidyle ; le crotononitrile, le pentènenitrile, le crotonate d'éthyle et leurs dérivés ; les acrylamides et notamment les méthacrylamides d'amino-éthyle, propyle, butyle, pentyle et hexyle, les cyanoacrylates, les di-acrylates et di-méthacrylates, les tri-acrylates et tri-méthacrylates, les tétra-acrylates et tétra-méthacrylates (tels que le pentaérythritol tetraméthacrylate), le styrène et ses dérivés, le parachloro-styrène, le pentafluoro-styrène, la N-vinyl pyrrolidone, la 4-vinyl pyridine, la 2-vinyl pyridine, les halogénures de vinyle, d'acryloyle ou de méthacryloyle, le di-vinylbenzène (DVB), et plus généralement les agents réticulants vinylique ou à base d'acrylate, de méthacrylate, et de leurs dérivés.

Parmi les dérivés du crotononitrile, du pentènenitrile et du crotonate d'éthyle, on peut envisager d'autres composés tels que des esters, les acides correspondants ou les acides aminés liés par leur fonction aminé, aisément accessibles par de simples réactions chimiques connues de l'homme du métier.

Les monomères préférés selon l'Invention sont ceux dont la solubilité dans le solvant protique de réaction est faible. Ainsi, les monomères utilisables conformément au procédé de l'Invention sont choisis parmi les composés dont la solubilité dans le solvant protique est finie et plus particulièrement inférieure à 0,1 M, plus préférentiellement entre 10⁻² et 10⁻⁶ M. Parmi de tels monomères, on peut par exemple citer le méthacrylate de butyle dont la solubilité, mesurée dans les conditions normales de température et de pression, est d'environ 4.10⁻² M. Selon l'Invention, et sauf indication contraire, les conditions normales de pression et de température (CNPT) correspondent à une température de 25°C et à une pression de 1.10⁵ Pa.

La quantité de monomère polymérisable dans la solution peut varier en fonction du souhait de l'expérimentateur. Cette quantité peut être supérieure à la solubilité du monomère considéré dans le solvant protique employé et peut représenter par exemple de 18 à 40 fois la solubilité dudit monomère à une température donnée, généralement la température ambiante ou celle de réaction. Selon une forme de réalisation avantageuse, cette concentration est comprise entre environ 0,1 M et 5 M.

Il est bien entendu possible d'employer un mélange de monomère correspondant à ceux décrits ci-dessus. Le terme monomère ne doit donc pas être entendu de manière limitée lorsqu'une telle possibilité est offerte à l'homme du métier.

Les tensioactifs sont des molécules comportant une partie lipophile (apolaire) et une partie hydrophile (polaire). Parmi les tensioactifs utilisables selon l'Invention, on peut notamment citer :
i) les tensioactifs anioniques dont la partie hydrophile est chargée négativement ; ils sont de préférence choisis parmi les composés de formule (III) suivante :

   R₆-A⁻, Cat⁺ (III)

   dans laquelle :
   - R₆ représente un groupe aryle ou alkyle en C₁-C₂₀, de préférence en C₁-C₁₄,
   - A- est anion choisi parmi les sulfonates, les sulfates, les phosphates, les carboxylates, et les sulfosuccinates,
   - Cat⁺ est un contre ion cationique, de préférence choisi parmi l'ion ammonium (NH₄⁺), les ammoniums quaternaires tels que tetrabutylammonium, et les cations alcalins tels que Na⁺, Li⁺ et K⁺ ;
ii) les tensioactifs cationiques dont la partie hydrophile est chargée positivement ; ils sont de préférence choisis parmi les ammoniums quaternaires de formule (IV) suivante :

   (R₇)₄-N⁺, An⁻ (IV)

   dans laquelle :
   - les groupes R₇, identiques ou différents, représentent une chaîne aliphatique, par exemple une chaîne alkyle en C₁-C₂₀, de préférence en C₁-C₁₄, ou aromatique,
   - An⁻ est un contre ion anionique choisi notamment parmi les dérivés du bore tels que le tetrafluoroborate ou les ions halogénures tels que F⁻, Br⁻, I⁻ ou Cl⁻ ;
iii) les tensioactifs zwittérioniques qui sont des composés neutres possédant des charges électriques formelles d'une unité et de signe opposé ; ils sont de préférence choisis parmi les composés de formule (V) suivante :

   Z⁻-R₈-Z⁺ (V)

   dans laquelle :
   - R₈ représente une chaîne alkyle en C₁-C₂₀, de préférence en C₁-C₁₄,
   - Z⁻ représente une fonction chargée négativement portée par R₈, de préférence correspondant à un sulfate ou un carboxylate,
   - Z⁺ représente une fonction chargée positivement, de préférence un ammonium ;
iv) les tensioactifs amphotères qui sont des composés se comportant à la fois comme un acide ou comme une base selon le milieu dans lequel ils sont placés ; ces composés peuvent avoir une nature zwittérionique, les acides aminés sont un exemple particulier de cette famille,
v) les tensioactifs neutres (non-ioniques) : les propriétés tensioactives, notamment l'hydrophilie, sont apportées par des groupements fonctionnels non chargés tels qu'un alcool, un éther, un ester ou encore une amide, contenant des hétéroatomes tels que l'azote ou l'oxygène ; en raison de la faible contribution hydrophile de ces fonctions, les composés tensioactifs non ioniques sont le plus souvent polyfonctionnels.

Les tensioactifs chargés peuvent bien entendu porter plusieurs charges.

Parmi les différentes significations du groupement aryle du groupe R₆ des composés de formule (III) ci-dessus, on peut notamment citer le cycle phényle, substitué ou non, et parmi les différentes significations du groupement alkyle R₆, les chaînes alkyle en C₁-C₂₀, de préférence en C₁-C₁₄.

A titre de composé de formule (III), on préfère utiliser le paratoluènesulfonate de tetraéthylammonium, le dodécylsulfate de sodium (SDS), le palmitate de sodium, le stéarate de sodium, le myristate de sodium, le di(2-éthylhexyl) sulfosuccinate de sodium, le méthylbenzène sulfonate et l'éthylbenzène sulfonate.

Parmi les différentes significations des groupes R7 des ammoniums quaternaires de formule (IV) ci-dessus, on peut notamment citer les groupes méthyle, éthyle, propyle, butyle et tetradécyle.

A titre de composé de formule (IV), on préfère utiliser le bromure de tetradécyltriméthyle ammonium (TTAB), les halogénures d'alkylpyridinium portant une chaîne aliphatique en C₁-C₁₈ et les halogénures d'alkylammonium.

A titre de tensioactif zwittérionique, on peut notamment citer le N,N-diméthyldodécylammoniumbutanate de sodium, le diméthyldodécylammonium propanate de sodium et les acides aminés.

A titre de tensioactif amphotère, on peut notamment citer le lauroamphodiacétate de disodium, les bétaïnes comme l'alkylamidopropylbétaïne ou la laurylhydroxysulfobétaïne.

A titre de tensioactif non-ioniques, on peut en particulier citer les polyéthers comme les tensioactifs polyéthoxylés tels que par exemple le lauryléther de polyéthylèneglycol (POE23 ou Brij ® 35), les polyols (tensioactifs dérivés de sucres) en particulier les alkylates de glucose tels que par exemple l'hexanate de glucose.

Les tensioactifs utilisables selon l'invention sont également des émulsifiants, *i.e*., lorsqu'il sont présents en faibles quantités, ils facilitent la formation d'une émulsion ou augmentent la stabilité colloïdale en faisant diminuer la vitesse d'agrégation ou la vitesse de coalescence ou les deux. Des mesures de l'une ou l'autre des vitesses selon les techniques connues par l'homme du métier comme la mesure de la taille des gouttes par diffusion de la lumière pourront permettre de déterminer le meilleur émulsifiant parmi les tensioactifs recommandés dans chacun des cas.

Parmi les tensioactifs préférés selon l'invention on peut citer les tensioactifs anioniques tels que les sulfonates, les ammoniums quaternaires et les tensioactifs non ioniques tels que les polyoxyéthylènes.

La quantité de tensioactifs dans la solution est variable, elle doit notamment être suffisante pour permettre la formation du film organique copolymérique, la quantité minimum de tensioactif peut être facilement déterminée en échantillonnant des solutions de composition identique mais de concentration variable en tensioactif. De manière générale la concentration en tensioactif est telle que la concentration micellaire critique (CMC) soit atteinte et qu'il puisse y avoir ainsi formation de micelles. La CMC d'un tensioactif peut être déterminée par les méthodes connues de l'homme du métier, par exemple par des mesures de tensions de surface.

La concentration en tensioactif au sein de la solution est typiquement au moins égale à la CMC et généralement comprise entre 0,5 mM et 5 M environ, de préférence entre 0,1 mM et 150 mM environ. La concentration recommandée en tensioactif est usuellement de 10 mM. Typiquement la quantité de tensioactif sera comprise entre 1/20 et 1/150 de celle du monomère et préférentiellement elle sera proche de 1/100, ainsi une valeur proche de 1/87 est adaptée.

L'intérêt du tensioactif réside dans sa capacité à former des micelles dans le solvant qui favorisent la croissance de macroradicaux, en les isolants du milieu extérieur, assurant ensuite la croissance du film.

Il existe de nombreux amorceurs de polymérisation radicalaire. Ce type de réaction est connu et étudié en détail dans l'art, antérieur (Rempp & Merrill, Polymer Synthesis, 1991, 65-86, Hüthig & Wepf). D'une manière générale l'amorceur est une espèce chimique qui permet la formation de radicaux. On distingue généralement trois types de conditions, selon l'amorceur employé, pour la mise en oeuvre de la réaction de polymérisation:
- l'amorçage chimique : les amorceurs les plus courants sont les peroxydes ou les composés azoïques, sous l'action de la chaleur, ces composés se dissocient en radicaux libres ; dans ce cas la réaction est effectuée à une température minimum correspondant à celle nécessaire à la formation de radicaux à partir de l'amorceur,
- l'amorçage thermique : les amorceurs thermiques sont en général utilisés spécifiquement dans un certain intervalle de température, en fonction de leur cinétique de décomposition,
- l'amorçage photochimique ou radiochimique : les amorceurs (photoamorceurs ou radioamorceurs) qui sont excités par le rayonnement déclenchées par irradiation (le plus souvent par UV, mais aussi par radiations y ou par faisceaux d'électrons) permettent la production de radicaux par des mécanismes plus ou moins complexes.

Les différents types d'amorceurs, associé à la méthode d'activation concernée, peuvent être employés. On peut distinguer trois type de réaction, chacune fonction de l'amorceur employé. Afin d'effectuer la polymérisation il est souhaitable de se placer dans les conditions correspondant à l'amorceur employé. Ainsi par exemple lorsqu'un amorceur photochimique est utilisé la réaction est effectuée en irradiant la solution à la longueur d'onde associée à. l'apparition de radicaux grâce à l'amorceur, dans le cas d'un amorceur chimique il suffit de se placer à une température supérieure à celle de l'apparition de radicaux à partir de l'amorceur.

Parmi les amorceurs susceptibles d'être employés dans le cadre de l'invention on peut notamment citer les amorceurs halogènes comme l'iode, les α-halogénoalkyles possédant des groupement aryle, allyle, carbonyle ou sulfonyle, les composés polyhalogénés comme le CCl₄ ou le CHCl₃, les composés possédant des liaisons covalentes très labiles avec des halogènes et correspondant généralement à des liaisons établies entre un hétéroatome, tel que N, S ou O, et un halogène, le persulfate de potassium (K₂S₂O₈), l'azobis(isobutyronitrile), les composés peroxydes comme le peroxyde de benzoyle, le peroxyde de *tert*-butyle, le peroxyde de cumyle, le perbenzoate de *tert*-butyle, l'hydroperoxyde de *tert*-butyle etc.

La quantité d'amorceur sera choisie selon les conditions opératoires employées. Généralement elle est comprise entre 1/1000 et 1/20 équivalents de monomère, typiquement aux alentours de 1/35.

Selon un mode de réalisation particulier, il est possible que le monomère et l'amorceur ne constituent qu'une seule entité chimique. Ainsi par exemple, certains monomères, particulièrement réactifs, lors d'une exposition à certains rayonnements forment spontanément des espèces radicalaires et permettent ainsi d'effectuer l'étape (b) de polymérisation.

Selon un mode de réalisation particulier de l'étape (b) la solution est placée tout d'abord au contact de la surface obtenue en (a) et l'amorceur est ensuite ajouté et la réaction effectuée.

Il est préférable que la réaction soit réalisée en absence d'oxygène, pour cela, et afin d'éliminer l'oxygène présent dans le milieu, il est recommandé de saturer la solution en gaz inerte comme de l'argon ou de l'azote, notamment en faisant passer un flux dudit gaz dans la solution préalablement à la réaction.

La réaction est typiquement effectuée à température ambiante et jusqu'à environ 100°C. Le facteur limitant les conditions de température est essentiellement la nature du solvant qui est employé. Il est bien entendu possible de travailler sur toute la plage de température dans laquelle le solvant reste liquide, l'amorceur de polymérisation radicalaire sera choisi pour être utilisable à la température choisie. Il est recommandé d'employer des amorceurs non thermique lorsque la température est inférieure à 25°C.

La solution peut en outre comporter au moins un composé, généralement organique, qu'il est souhaitable d'incorporer dans le film, il peut s'agir d'une biomolécule, comme une protéine, ou encore une molécule présentant des propriétés biologiques intéressantes comme des composés antithrombiques et anticoagulants. Il est préférable dans ce cas que la molécule d'intérêt soit peu soluble dans le solvant protique et qu'elle possède de préférence, dans ce milieu, une solubilité proche de celle du monomère et avantageusement inférieure. Un composé minéral peut également être ajouté à la solution, il peut notamment s'agir d'ions métalliques ou de complexes métalliques. II est bien entendu souhaitable d'effectuer la réaction sous agitation afin que des micelles puissent facilement se former. Pour cela il est possible d'effectuer une agitation mécanique à l'aide notamment d'un barreau magnétique, par barbotage ou encore avec des ultrasons.

L'épaisseur du film organique copolymérique formé sur la surface conductrice ou semi-conductrice de l'électricité est contrôlée par la simple variation des paramètres expérimentaux, accessibles, de manière empirique à l'homme du métier selon le monomère polymérisable et le primaire d'adhésion qu'il emploie. Ainsi de manière non exhaustive l'épaisseur du film peut-être contrôlée par le nombre de balayages dans le cas d'une voltampérométrie cyclique et en fonction de la concentration du monomère et de la durée de la seconde étape du procédé.

La présente Invention a également pour objet les surfaces conductrices ou semiconductrices de l'électricité obtenues en mettant en oeuvre le procédé décrit ci-dessus, lesdites surfaces étant caractérisées par le fait qu'elles comportent au moins une face au moins en partie recouverte par un film organique copolymérique greffé d'au moins un monomère polymérisable par voie radicalaire et d'au moins une couche d'accroche électrogreffée. De telles surfaces sont susceptibles d'être obtenues par le procédé précédemment décrit.

Les films organiques copolymériques obtenus selon l'Invention ont avantageusement une épaisseur comprise entre 5 et 1000 nm inclusivement et encore plus préférentiellement entre 10 et 200 nm inclusivement.

Le procédé selon l'invention permet notamment de piloter de manière plus aisée le processus de formation du film comparativement à l'invention décrite dans la demande de brevet français n° 06 01804, en effet la séparation nette en deux étapes permet de contrôler efficacement la qualité de la couche d'accroche ainsi que celle du film polymérique formé lors de l'étape (b).

Il y a également lieu de remarquer que la seconde étape est effectuée sans employer d'électricité, ce qui peut représenter une importante économie. Par ailleurs l'étape (b) de polymérisation conduit à des produits plus propres car aucune réaction parasite qui pourrait être due au potentiel appliqué ne vient troubler le système.

L'encapsulation d'entités lors de l'étape (b) est d'autant plus simple que les conditions de réaction sont moins contraignantes qu'elles ne l'étaientt dans la précédente invention.

Les surfaces obtenues conformément à l'Invention peuvent être utilisées dans tout type d'industrie et notamment dans les industries de l'électronique et de la microélectronique (par exemple pour la préparation de composants microélectroniques), pour la préparation de dispositifs biomédicaux tels que par exemple des dispositifs implantables dans l'organisme (stents par exemple), des kits de criblages, etc.

L'invention a également pour objet un kit de préparation d'un film organique copolymérique sur une surface conductrice ou semi-conductrice de l'électricité. L'utilisation du procédé permet la préparation et l'application d'un kit de pour former un film organique copolymérique sur une surface conductrice ou semi-conductrice de l'électricité. La préparation de ce kit et son utilisation se font selon les étapes du procédé précédemment décrit.

Un tel kit est caractérisé en ce qu'il comporte les éléments suivants :
- une surface conductrice ou semi-conductrice de l'électricité sur laquelle a été électrogreffé un primaire d'adhésion tel que défini selon l'Invention,
- une solution comportant :
   - au moins un solvant protique,
   - au moins un monomère polymérisable par voie radicalaire ayant une solubilité dans ledit au moins un solvant protique inférieure à 0,1M à 25°C et 1.10⁵ Pa,
   - au moins un tensioactif, la concentration en tensioactif étant telle que la concentration micellaire critique (CMC) soit atteinte et qu'il puisse y avoir formation de micelles,
- un amorceur de polymérisation radicalaire.

Il est souhaitable de conserver les trois composants dans des conditionnements distincts. De manière alternative, la solution et la surface conductrice sont conservées dans le même conditionnement, réduisant ainsi la manutention nécessaire pour mettre en oeuvre le procédé, et l'amorceur dans un conditionnement distinct.

Il est avantageux que l'amorceur de polymérisation radicalaire soit dans une solution comportant au moins un solvant protique, de préférence identique à celui de la solution d'amorceur. Dans la mesure où l'amorceur ne présenterait pas une bonne solubilité dans le solvant protique il est recommandé que la solution comporte en outre un tensiooactif, de préférence identique à celui de la solution de monomère.

Selon un mode de réalisation particulier la solution comprend des composés organique qu'il est souhaitable d'incorporer dans le film ainsi que cela a été décrit dans le procédé.

Selon un autre mode de réalisation la solution se présente sous la forme d'une émulsion. Il est possible dans ce cas que la solution contienne en outre un agent de stabilisation d'émulsion.

Afin de mettre en oeuvre le procédé selon l'invention en utilisant le kit, il est souhaitable de réunir les trois composants et de les faire réagir entre eux.

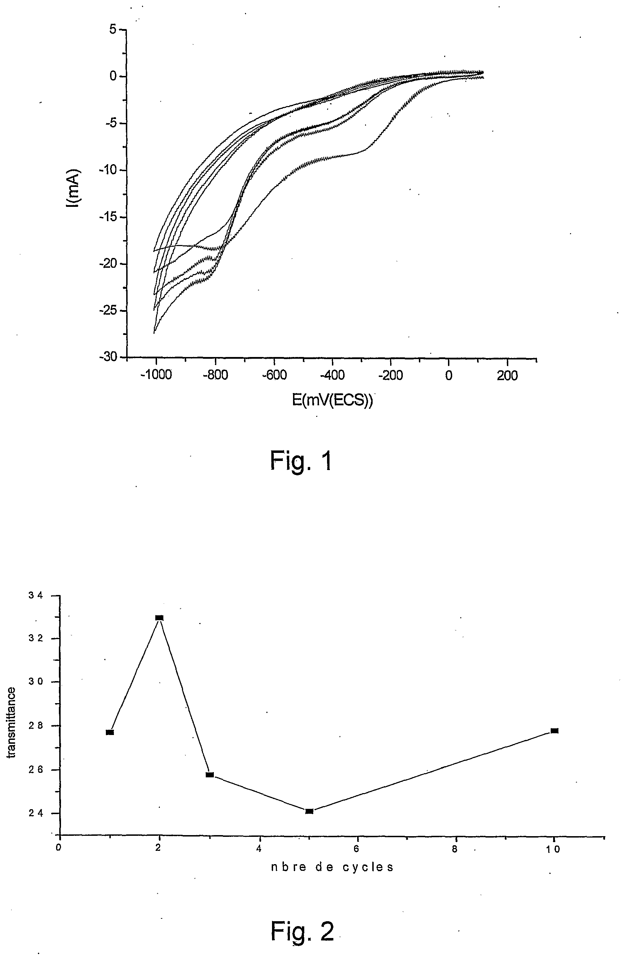

Outre les dispositions qui précèdent, l'Invention comprend encore d'autres dispositions qui ressortiront de la description qui va suivre, qui se réfère à des exemples de formation de films organiques copolymériques sur des surfaces conformément au procédé de l'Invention, ainsi qu'aux figures 1 à 11 annexées dans lesquelles :
- la figure 1 représente un yoltamogramme observé à partir d'une solution de tetrafluoroborate de 4-nitrobenzènediazonium dans de l'eau acide ;
- la figure 2 représente l'influence du nombre de cycle sur la valeur de la transmitance d'une couche d'amorce traitée par ultrasons obtenue à partir d'une solution de tetrafluoroborate de 4-nitrobenzènediazonium dans de l'eau acide ;
- la figure 3 représente l'influence de la vitesse de balayage sur la valeur de la transmitance d'une couche d'amorce traitée par ultrasons obtenue à partir d'une solution de tetrafluoroborate de 4-nitrobenzènediazonium dans de l'eau acide ;
- la figure 4 représente l'influence du potentiel de rebroussement sur la valeur de la transmitance d'une couche d'amorce traitée par ultrasons obtenue à partir d'une solution de tetrafluoroborate de 4-nitrobenzènediazonium dans de l'eau acide ;
- la figure 5 représente l'influence de la concentration en sel de diazonium sur la valeur de la transmitance à 1350 cm⁻¹ obtenue à partir d'une solution de tetrafluoroborate de 4-nitrobenzènediazonium dans de l'eau acide ;
- la figure 6 représente l'influence du potentiel de rebroussement sur sur la valeur de la transmitance à 1350 cm⁻¹ pour une couche dans des conditions de greffage optimales obtenue à partir d'une solution de tetrafluoroborate de 4-nitrobenzènediazonium dans de l'eau acide ;
- la figure 7 représente l'influence du nombre de cycle sur la valeur de la transmitance d'une couche d'amorce traitée par ultrasons obtenue à partir d'une solution de tetrafluoroborate de benzyle diazonium dans de l'eau acide ;
- la figure 8 représente l'influence du potentiel de rebroussement sur la valeur de la transmitance d'une couche d'amorce traitée par ultrasons obtenue à partir d'une solution de tetrafluoroborate de benzyle diazonium dans de l'eau acide ;
- la figure 9 représente les spectres infrarouge d'un film de polynitrophénylène avec : le polyBUMA (a), le polystyrène (b) et le polyacétate de vinyle (c) ;
- la figure 10 représente les spectres infrarouges de deux films de polynitrophénylène et de polyBUMA montrant l'influence de l'épaisseur de la sous couche d'accroche sur les conditions de greffage ;
- la figure 11, représente les spectres infrarouges de cinq films copolymériques de polyBUMA réalisé avec des solutions de concentrations différentes en monomère.

II doit être entendu toutefois que ces exemples ne sont donnés qu'à titre purement illustratif de l'Invention dont ils ne constituent en aucune manière une quelconque limitation.

### EXEMPLES

Les exemples présentés ci-après ont été réalisés sur des surfaces constituées de plaques d'acier inoxydable 316 d'environ 6 cm². Ces exemples, conformes à l'esprit de l'invention, illustrent un processus d'optimisation des conditions opératoire du procédé.

Le procédé a été mis en oeuvre pour réaliser un film copolymérique constitué d'une couche d'accroche de polynitrophénylène, obtenue à l'aide de sels de diazonium, sur lequel ont réagit différents monomère polymérisables par voie radicalaire.

Sauf dispositions contraires, lorsqu'il est précisé qu'une plaque, ou lame, est nettoyée, il s'agit d'un lavage à l'eau suivi d'un traitement aux ultrasons dans l'acétone.

### EXEMPLE 1 - Etape (a) du procédé

Les différents paramètres de synthèse ont été optimisés afin d'obtenir une couche d'épaisseur contrôlée, homogène et solidement greffée sur le substrat métallique.

Afin d'obtenir une telle couche, il a été décidé de réaliser l'électroréduction de sels de diazonium. Des études préalables ont montré que de telles couches greffées étaient obtenues pour des concentrations en sel de diazonium comprises entre 1 et 10 mM. Dans les exemples qui suivent, sauf dispositions contraires, la concentration initiale en sel a été fixée à 10 mM.

La synthèse a été réalisée en milieux aqueux acide à partir d'un sel commercial, le 4-nitrobenzènediazoniumtétrafluoroborate, (NO₂C₆H₄N₂⁺BF₄⁻), et du tetrafluoroborate de benzyldiazonium (C₆H₅N₂⁺BF₄⁻).

Le dispositif électrochimique qui a été employé était constitué d'un potentiostat et de 3 électrodes immergées dans une cellule électrochimique.

Le potentiostat a permit de contrôler précisément le potentiel imposé à l'électrode de travail et de choisir la méthode d'imposition de ce potentiel (chronoampérométrie, voltamétrie...).

Le choix du métal composant l'électrode de travail s'est porté sur l'acier inoxydable (316), c'est cette électrode qui correspond à la surface sur laquelle le film copolymérique a été formé. C'est un métal technologique largement utilisé dans l'industrie.

### 1.1 - sel commercial

Une solution du sel à une concentration de 10 mM dans l'eau à un pH de 2 a été introduite dans la cellule électrochimique. Les premières lames ont été réalisées par voltamétrie cyclique à une vitesse de balayage de 20 mV/s, pour un potentiel de rebroussement de -1 V et avec 5 et 10 cycles. Le voltamogramme (intensité en fonction du potentiel) obtenu est présenté à la figure 1. Sur ce voltamogramme, on peut constater que, lors de la synthèse, c'est tout d'abord le sel de diazonium qui est réduit vers - 0,25 V puis les protons vers - 0,8 V.

La couche de polynitrophénylène synthétisée a un aspect cuivré doré sur la plaque d'acier.

A l'oeil nu, il semble que le nettoyage de la plaque fasse disparaître une partie de cette couche d'accroche.

Différents paramètres ont ensuite été modifiés afin de déterminer les meilleures conditions pour obtenir le film le plus homogène et le plus résistant possible.

### a) Influence du nombre de cycles

Le nombre de cycles a été varié tout en maintenant les autres paramètres constants, le potentiel a été fixé à -1 V et la vitesse de balayage à 20 mV/s. La transmittance d'une des bandes d'absorption caractéristiques du polynitrophénylène obtenue après nettoyage a été mesurée en effectuant un spectre infrarouge. La bande d'absorption considérée est la bande d'absorption qui apparaît vers 1350 cm⁻¹, elle correspond à bande d'allongement symétrique du groupement NO₂. La mesure de la transmittance permet d'avoir une idée de l'épaisseur du film obtenu. Celle-ci est obtenue avec une incertitude de l'ordre de 2 %.

Lors de la synthèse électrochimique, il a été constaté que les films devenaient plus épais avec l'augmentation du nombre de cycles.

On a porté sur la figure 2 le pourcentage de transmittance à 1350 cm⁻¹ en fonction du nombre de cycles d'un film obtenu et traité aux ultrasons et à l'acétone. II apparait que plus le nombre de cycles est petit, plus la couche d'amorce résiste aux ultrasons. Il semblerait donc que les films les plus minces soient les plus résistants. Le nombre de cycle a, pour la suite des expériences, alors été fixé à 2.

### b) Influence de la vitesse de balayage

La vitesse de balayage est un paramètre important. En effet, il est important que les radicaux formés aient le temps de se greffer. Si la vitesse est trop importante, la concentration en radicaux augmente et la dimérisation pourrait être favorisée au dépend du greffage.

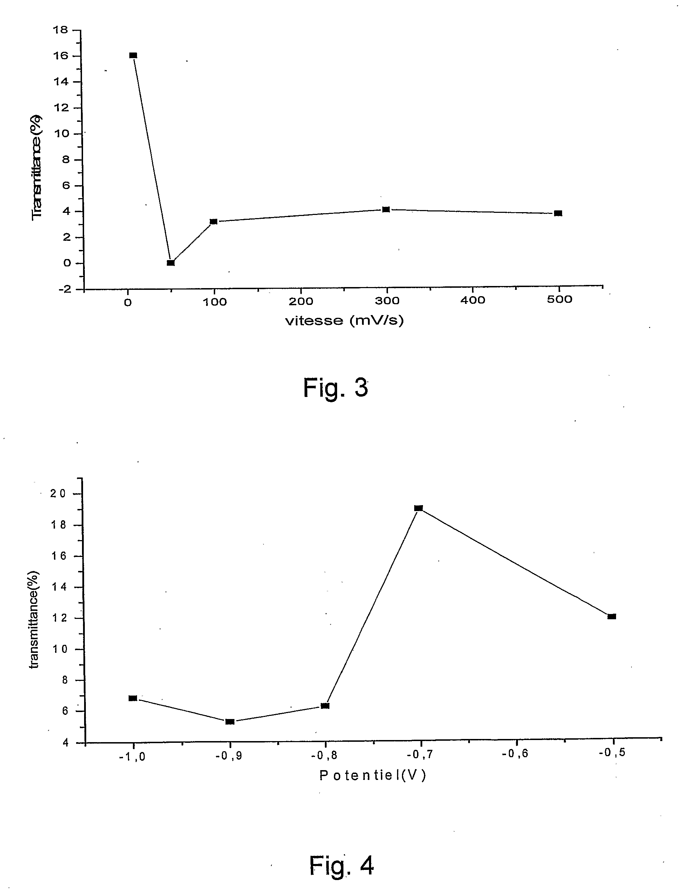

Les résultats obtenus sont représentés sur la figure 3 sur laquelle sont reportés les pourcentages de transmittance à 1350 cm⁻¹ en fonction de la vitesse de balayage d'une couche obtenue après nettoyage, le potentiel étant fixé à -1 V. Le meilleur résultat est obtenu pour une vitesse de balayage de 10 mV/s.

### c) Influence du potentiel de rebroussement

La variation du potentiel de rebroussement influe sur la quantité de courant traversant la cellule électrochimique et donc sur la quantité de radicaux formés en solution. Afin d'optimiser le potentiel, son influence a été étudiée dans un intervalle compris entre -0,5 V et -1 V.

L'influence du potentiel sur la valeur de transmittance (en %) à 1350 cm⁻¹, après nettoyage est représenté sur la figure 4.

II semblerait que vers -0,7 V, le film soit plus homogène et plus résistant. Mais le choix du potentiel est assez difficile car il faut tenir compte de différents paramètres. En effet, le milieu étant acide, ce qui signifie que les protons y sont présents en grande quantité, il faut tenir compté du fait que la réduction des protons se produit vers -0,6 V, et que le dégagement de H₂ qui est alors produit n'est pas favorable au greffage. De plus, il se pourrait qu'un potentiel trop négatif entraîne la formation d'une trop grande quantité de radicaux et donc favoriserait la dimérisation.

### d) Influence de la concentration

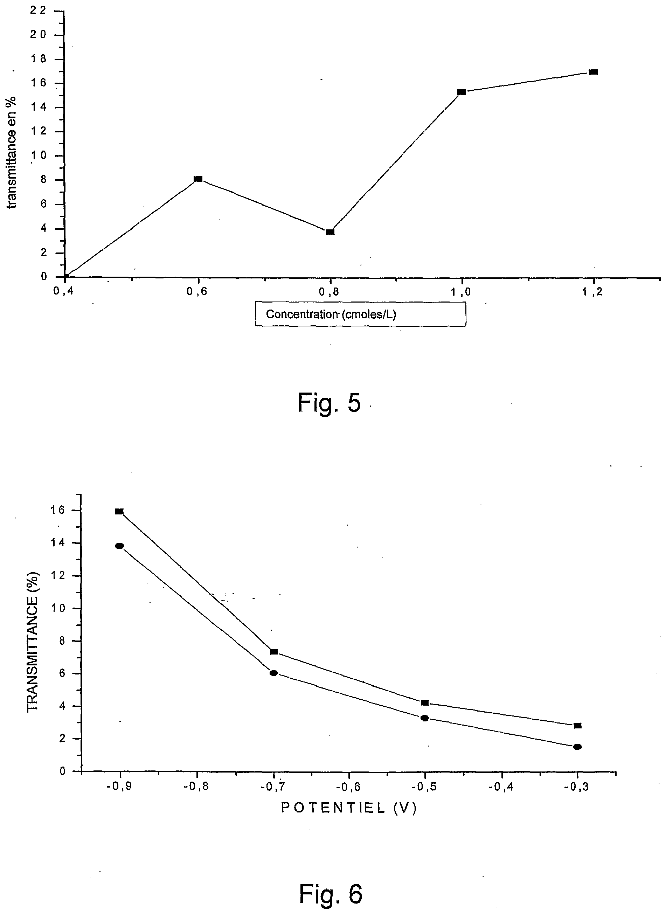

Ce paramètre a été l'un des premiers à avoir été étudié, une plage de la concentration de 4 mM à 12 mM a été testée. Les résultats obtenus sont représentés sur la figure 5 (la concentration est exprimée en en centimoles (10⁻² moles) par litre), pour des lames après nettoyage.

Les concentrations pour lesquelles les résultats ont semblé être les meilleurs étaient 10 mM et 12 mM. Or, en fixant la concentration à de telles valeurs et en faisant varier les autres paramètres, les résultats obtenus étaient moins bons.

Des essais avec une concentration de 2 mM, un potentiel de - 0,6 V, un nombre de cycles égal à 2 et une vitesse de balayage assez faible (10 mV/s) ont été mené et ont conduit à la formation d'une couche homogène, ayant une transmittance à 1350 cm⁻¹ de l'ordre de 5% et qui résiste très bien aux ultrasons et au traitement à l'acétone.

Ayant obtenu les conditions optimales de greffage, l'impact du potentiel sur cette couche a été étudié. Les résultats obtenus, représentés sur la figure 6, montrent que le potentiel intervient également au niveau de l'épaisseur des couches obtenus. La comparaison des résultats avant (■) et après nettoyage (●), montre qu'un pourcentage pratiquement identique de polynitrophénylène est perdu quelque soit l'épaisseur apparente de la couche.

### 1.2 - autre sel

Le tétrafluoroborate de benzyle diazonium a été préparé avec 25% de rendement en faisant réagir l'aniline (10 mmoles) sur le nitrite de sodium (11 mmoles) en présence d'acide tétrafluoroborique à -10 °C. Une solution du sel à une concentration de 10 mM dans l'eau à un pH de 2 a été introduite dans la cellule électrochimique.

### a) Influence du nombre de cycles

Une étude a été réalisée sur l'influence du nombre de cycles, les résultats obtenus différent de ceux obtenus dans le cas du sel commercial. Les premières lames ont été réalisées avec un potentiel de -1V, une vitesse de balayage de 20 mV/s et un nombre de cycles variant de 1 à 10. Les films obtenus ont un aspect jaune clair qui diffuse la lumière.

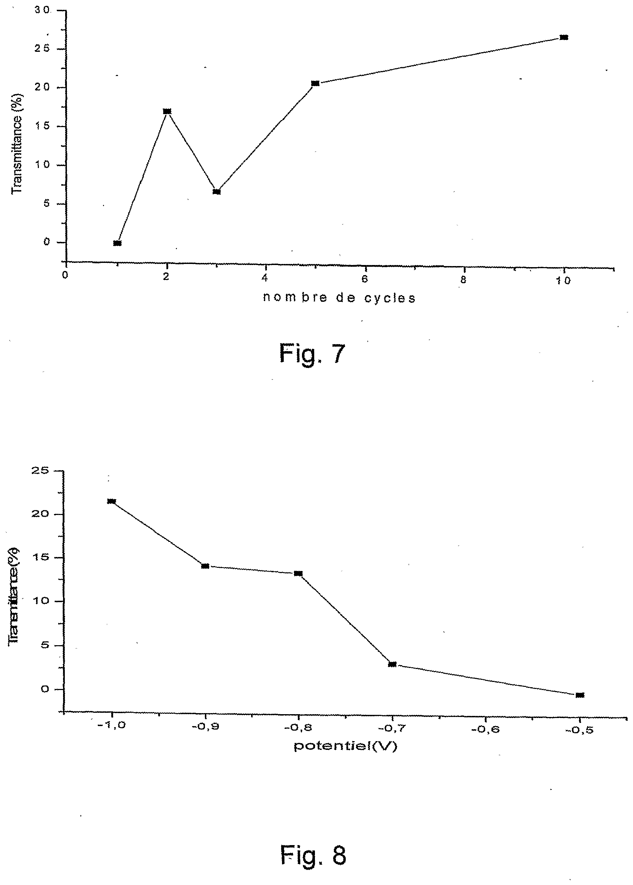

La valeur de la transmittance est représentée sur la figure 7 à l'issu de ce traitement (résultats obtenus en considérant la bande d'absorption vers 700 cm⁻¹ sur le spectre infrarouge).

Dans le cas du sel commercial, les expériences ont montré que les films les plus fins étaient les plus résistants. Or dans ce cas, ce sont les films les plus épais qui semblent les plus résistants. Le paramètre nombre de cycles a alors été fixé à 5.

### b) Influence du potentiel de rebroussement

L'influence du potentiel de rebroussement a été étudiée de -0,5 V à -1 V et les couches ont été réalisées à une vitesse de balayage de 20 mV/s pour un nombre de cycles de 5. Il ressort de la variation de la transmittance en fonction du potentiel de rebroussement, représentée sur la figure 8, que les potentiels les plus négatifs donnent les films les plus épais et les plus résistants.

### 1.2 - conclusion

A l'issu de cette étude, il apparait que la concentration et de la valeur du potentiel ont un impact majeur de sur les conditions de greffage du sel de diazonium et que, par ailleurs, les autres paramètres (nombre de cycles et vitesse de balayage) influent sur l'épaisseur des films obtenus. Les valeurs proposées correspondent ainsi à des conditions optimisées pour les primaires considérés.

### EXEMPLE 2 - Etape (b) du procédé

Trois monomères ont été sélectionné afin d'illustré la seconde étape du procédé : le méthacrylate de butyle (BUMA), le styrène et l'acétate de vinyle

A titre de solvant protique il a été décidé d'employer l'eau, il s'agit ici d'eau desionisée. Les monomères employés présentent une faible solubilité dans l'eau.

A titre de tensioactif il a été décidé d'employer le dodécylsulfate de sodium (SDS) (8 mM).

L'amorceur de polymérisation radicalaire (2 mM) utilisé est le persulfate de potassium (K₂S₂O₈), celui-ci permet de former des radicaux à une température inférieure à 100°C.

Les solutions ont été préparées en additionnant l'ensemble des composés au solvant (32 mL), la concentration des monomères était de 0,7 M. Ensuite, dans un tube en verre rodé, ont été introduit un agitateur magnétique et un support en téflon pour éviter tout contact entre l'agitateur magnétique et la lame d'inox recouverte du polynitrophénylène. Les plaques synthétisées dans l'exemple 1 ont alors été ajoutée. L'ensemble est agité, à l'aide d'un barreau magnétique, et chauffé jusqu'à 70°C pendant deux heures. Pendant la durée de l'expérience, un barbotage d'argon dans le milieu réactionnel est mis en place afin de chasser le dioxygène pouvant s'y trouver. En effet, le dioxygène est un inhibiteur de la polymérisation radicalaire (il provoque la terminaison des chaînes en croissance).

### 2.1 - BUMA

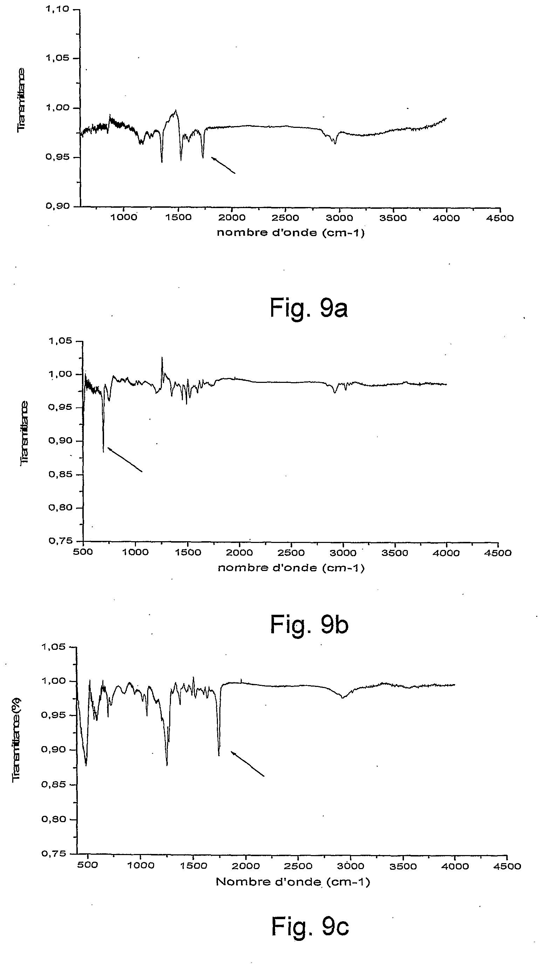

Après nettoyage de la plaque les résultats obtenus sont assez satisfaisants comme le montre le spectre infrarouge représenté sur la figure 9a. La bande d'absorption à 1730 cm⁻¹ est caractéristique du polyBUMA (plus précisément du, groupement carbonyle). La transmittance obtenue est de l'ordre de 4%. Le polyBUMA greffé donne un aspect bleuté à la plaque.

Il apparait donc qu'un greffage du polyBUMA sur la couche d'accroche ait bien été effectué.

### 2.2 - styrène

Après nettoyage, les plaques obtenues présentent un film blanc laiteux, le spectre infrarouge d'une plaque après nettoyage (acétone et ultrasons) est représenté sur la figure 9b. La bande caractéristique du styrène considérée est la bande située vers 700 cm⁻¹ (déformation hors du plan des C-H aromatiques) car c'est la bande d'absorption la plus intense du spectre. La valeur de la transmittance obtenue est de 11%.

Il apparait donc qu'un greffage du polystyrène sur la couche d'accroche ait bien été effectué.

### 2.3 l'acétate de vinyle

Le spectre infrarouge d'une plaque obtenue après nettoyage est représenté sur la figure 9c. La bande caractéristique de l'acétate de vinyle considérée est la bande la plus intense située à 1750 cm⁻¹, elle correspond à la bande d'allongement du groupement carbonyle CO de l'ester. La valeur de la transmittance obtenue est de 10,7 %.

Il apparait donc qu'un greffage du polyacétate de vinyle sur la couche d'accroche ait bien été effectué.

### 2.4 étude de l'influence du potentiel de synthèse de la couche d'accroche

Afin de mettre en évidence l'influence de l'épaisseur de la couche d'accroche sur le film copolymérique, des couches d'accroche d'épaisseurs différentes ont été réalisée en faisant varier le potentiel.

Les valeurs de transmittances, déterminées à partir de la bande caractéristique du NO₂ à 1350 cm⁻¹, de deux types de plaques, ayant subit deux cycles voltammétriques, sont présentées dans le tableau I :

| Echantillons | Concentration (mM) | Vitesse de balayage (mV/s) | Potentiel (V) | Transmittance obtenue (%) |
|---|---|---|---|---|
| Nitropo1 | 2 | 10 | -0,3 | 1,5 |
| Nitropo4 | 2 | 10 | -0,9 | 13,8 |

Le BUMA a été utilisé comme monomère. Dans les deus cas, un greffage du polyBUMA est observé. Pour en estimer l'épaisseur, une analyse à l'infrarouge a été réalisée après avoir laissé tremper les plaques pendant plusieurs heures dans le DMF (diméthylformamide) et les avoir traitées aux ultrasons.

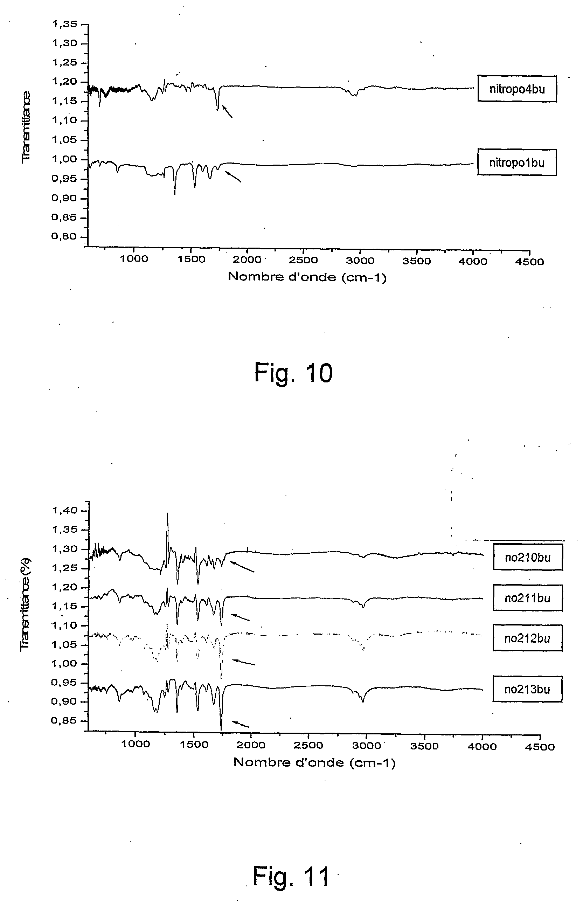

Les spectres infrarouges d'un film de polynitrophenylène et d'un film de polyBUMA montrant l'influence de l'épaisseur de la sous couche d'accroche sur les conditions de greffage sont représentés sur la figure 10. La bande d'absorption caractéristique du polyBUMA est située à 1730 cm⁻¹ (repérée par les deux flèches).

Le spectre supérieur représente l'échantillon (polydiazonium+BUMA) qui possède la couche d'accroche la moins épaisse et le spectre inférieur représente l'échantillon qui possède la couche d'accroche la plus épaisse.

Sur le spectre supérieur, la bande d'absorption caractéristique a une transmittance de 6 % tandis que sur le spectre inférieur, elle est de 3 %. Il semblerait dans ces conditions que plus la couche d'accroche est fine, plus l'épaisseur du second film greffé est importante.

### 2.5 influence de la concentration en monomère

Afin d'étudier l'influence de la concentration en monomère cinq solutions avec des concentrations en BUMA différentes (0,5 M pour no210bu, 1M pour no211bu, 1,4 M pour no212bu et 2 M pour no213bu) ont été préparées. Pour chacune d'elle, le rapport concentration en monomère sur concentration en tensioactif a été fixé à 87,5, la quantité d'amorceur est restée constante (2 mM).

Les spectres infrarouges obtenus après un nettoyage au DMF des plaques est représenté figure 11 pour chacune des solutions. La bande d'absorption du carbonyle à 1730 cm⁻¹ caractéristique du polyBUMA a été utilisée pour le calcul des transmittances. Les résultats sont exposés dans le tableau II :

| Echantillons | no210bu | no211bu | no212bu | no213bu |
|---|---|---|---|---|
| Concentration (mol/l) | 0,5 | 1 | 1,4 | 2 |
| Transmittance (%) | 4 | 8 | 12,1 | 12,1 |

Au vu de ce tableau, il semblerait que l'épaisseur du film augmente avec la concentration jusqu'à arriver à une épaisseur maximale.

### EXEMPLE 3 - kit de préparation d'un film organique copolymérique

Un tel kit a été réalisé à partir des plaques obtenues à l'exemple 1. Les plaques ont été conditionnées dans des conteneurs de verre ou de plastique garni de téfion contenant des solutions aqueuses desionisées et saturées en argon contenant du BUMA et du SDS dans les proportions indiquées à l'exemple 2.

Les conteneurs ont été conservés de 1 à 14 jours. A la fin de la période une solution aqueuse, desionisée et saturée en argon, de l'amorceur à été additionnée sous agitation à environ 70°C aux solutions dans les conteneurs.

Les résultats sont identiques à ceux qui ont été obtenus dans l'exemple 2.

## Revendications

1. Procédé de formation d'un film organique copolymérique sur une surface conductrice ou semi-conductrice de l'électricité en deux étapes :
a) électrolyse d'une solution électrolytique renfermant un primaire d'adhésion choisi parmi les sels d'aryle diazonium de formule (I) :
R-N₂⁺, A⁻ (I)
dans laquelle :
- A représente un anion monovalent et
- R représente un groupe aryle,
jusqu'à formation d'une couche d'accroche sur la surface, ladite électrolyse étant réalisée à un potentiel de réduction au moins égal au potentiel de réduction du primaire d'adhésion,
b) réaction, en présence d'un amorceur de polymérisation radicalaire, d'une solution comportant :
- au moins un solvant protique,
- au moins un monomère polymérisable par voie radicalaire ayant une solubilité dans ledit au moins un solvant protique inférieure à 0,1M à 25°C et 1.10⁵ Pa,
- au moins un tensioactif, la concentration en tensioactif étant telle que la concentration micellaire critique (CMC) soit atteinte et qu'il puisse y avoir formation de micelles,
sur la surface obtenue à l'issu de l'étape (a).

2. Procédé selon la revendication 1, **caractérisé en ce que** la surface conductrice ou semi-conductrice de l'électricité est choisie parmi l'inox, l'acier, le fer, le cuivre, le nickel, le cobalt, le niobium, l'aluminium, l'argent, le titane, le silicium avec ou sans son oxyde, le nitrure de titane, le tungstène, le nitrure de tungstène, le tantale, le nitrure de tantale et les surfaces métalliques nobles composées par au moins un métal choisi parmi l'or, le platine, l'iridium et le platine iridié.

3. Procédé selon la revendication 1 ou 2, **caractérisé en ce que** le solvant de la solution électrolytique est choisis parmi la diméthylformamide, l'acétate d'éthyle, l'acétonitrile, le diméthylsulfoxyde, tétrahydrofurane, les solvants protiques, ou un mélange de deux ou plusieurs de ces solvants.

4. Procédé selon la revendication 3, **caractérisé en ce que** le solvant protique est avantageusement choisi dans le groupe constitué par l'eau, l'acide acétique, les solvants hydroxylés comme le méthanol et l'éthanol, les glycols liquides de faible poids moléculaires et leurs mélanges.

5. Procédé selon la revendication 1, **caractérisé en ce que** A est choisi parmi les halogénures, les halogénoboranes, les alcoolates, les carboxylates, les perchlorates et les sulfates.

6. Procédé selon la revendication 5, **caractérisé en ce que** le sel d'aryle diazonium est choisi parmi le tétrafluoroborate de phényldiazonium, le tétrafluoroborate de 4-nitrophényldiazonium, le tétrafluoroborate de 4-bromophényldiazonium, le chlorure de 2-méthyl-4-chlorophényldiazonium, le tétrafluoroborate de 4-benzoylbenzènediazonium, le tétrafluoroborate de 4-cyanophényldiazonium, le tétrafluoroborate du 4-carboxyphényldiazonium, le tétrafluoroborate de 4-acétamidophényldiazonium, le tétrafluoroborate de l'acide 4-phénylacétique diazonium, le sulfate de 2-méthyl-4-[(2-méthylphényl)diazényl]benzènediazonium, le chlorure de 9,10-dioxo-9,10-dihydro-1-anthracènediazonium, le tétrafluoroborate de 4-nitronaphtalènediazonium, et le tétrafluoroborate de naphtalènediazonium.

7. Procédé selon les revendications 1 à 6, **caractérisé en ce que** la concentration en primaire d'adhésion dans la solution électrolytique est comprise entre 10⁻⁴ et 0,5 M.

8. Procédé selon les revendications 1 à 7, **caractérisé en ce qu'**il comporte une étape de nettoyage de la surface obtenue à l'issue de l'étape (a).

9. Procédé selon les revendications 1 à 8, **caractérisé en ce que** le solvant protique de l'étape (b) est choisi dans le groupe constitué par l'eau, l'acide acétique, les solvants hydroxylés comme le méthanol et l'éthanol, les glycols liquides de faible poids moléculaires et leurs mélanges.

10. Procédé selon les revendications 1 à 9, **caractérisé en ce que** le solvant protique est utilisé en mélange avec un solvant aprotique et **en ce que** le mélange résultant présente les caractéristiques d'un solvant protique.

11. Procédé selon les revendications 1 à 10, **caractérisé en ce que** le monomère polymérisable par voie radicalaire est choisi parmi les monomères vinyliques.

12. Procédé selon la revendication 11, **caractérisé en ce que** le monomère vinylique est choisi parmi les monomères de formule (II) suivante : 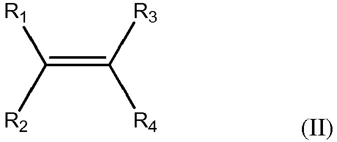 dans laquelle les groupes R₁ à R₄, identiques ou différents, représentent un atome monovalent non métallique tel qu'un atome d'halogène ou un atome d'hydrogène, ou un groupe chimique saturé ou insaturé, tel qu'un groupe alkyle, aryle, un groupe -COOR₅ dans lequel R₅ représente un atome d'hydrogène ou un groupe alkyle en C₁-C₆, nitrile, carbonyle, amine ou amide.

13. Procédé selon la revendication 12, **caractérisé en ce que** le monomère vinylique est choisi parmi l'acétate de vinyle, l'acrylonitrile, le méthacrylonitrile, le méthacrylate de méthyle, le méthacrylate d'éthyle, le méthacrylate de butyle, le méthacrylate de propyle, le méthacrylate d'hydroxyéthyle, le méthacrylate d'hydroxypropyle, le méthacrylate de glycidyle ; le crotononitrile, le pentènenitrile, le crotonate d'éthyle et leurs dérivés ; les acrylamides et notamment les méthacrylamides d'amino-éthyle, propyle, butyle, pentyle et hexyle, les cyanoacrylates, les di-acrylates et di-méthacrylates, les tri-acrylates et tri-méthacrylates, les tétra-acrylates et tétra-méthacrylates (tels que le pentaérythritol tetraméthacrylate), le styrène et ses dérivés, le parachloro-styrène, le pentafluoro-styrène, la N-vinyl pyrrolidone, la 4-vinyl pyridine, la 2-vinyl pyridine, les halogénures de vinyle, d'acryloyle ou de méthacryloyle, le di-vinylbenzène (DVB), et plus généralement les agents réticulants vinylique ou à base d'acrylate, de méthacrylate, et de leurs dérivés.

14. Procédé selon les revendications 1 à 13, **caractérisé en ce que** la quantité de monomère polymérisable présents dans la solution électrolytique représente de 18 à 40 fois la solubilité dudit monomère dans le solvant protique à une température donnée.

15. Procédé selon les revendications 1 à 14, **caractérisé en ce que** la concentration de monomère polymérisable par voie radicalaire est comprise entre 0,1 M et 5 M.

16. Procédé selon les revendications 1 à 15, **caractérisé en ce que** le tensioactif est un tensioactif anionique de formule (III) suivante :
R₆-A⁻, Cat⁺ (III)
dans laquelle :
- R₆ représente un groupe aryle ou alkyle en C₁-C₂₀,
- A- est anion choisi parmi les sulfonates, les sulfates, les phosphates, les carboxylates, et les sulfosuccinates,
- Cat⁺ est un contre ion cationique choisi parmi l'ion ammonium, les ammoniums quaternaires et les cations alcalins.

17. Procédé selon la revendication 16, **caractérisé en ce que** les tensioactifs de formule (III) est choisi parmi le paratoluènesulfonate de tetraéthylammonium, le dodécylsulfate de sodium, le palmitate de sodium, le stéarate de sodium, le myristate de sodium, le di(2-éthylhexyl)sulfosuccinate de sodium, le méthylbenzène sulfonate et l'éthylbenzène sulfonate.

18. Procédé selon les revendications 1 à 15, **caractérisé en ce que** le tensioactif est un tensioactif cationique de formule (FV) suivante : dans laquelle :
- les groupes R₇, identiques ou différents, représentent une chaîne alkyle en C₁-C₂₀,
- An⁻ est un contre ion anionique.

19. Procédé selon la revendication 18, **caractérisé en ce que** le tensioactif cationique est choisi parmi le bromure de tetradécyltriméthyle ammonium, les halogénures d'alkylpyridinium portant une chaîne aliphatique en C₁-C₁₈ et les halogénures d'alkylammonium.

20. Procédé selon l'une quelconque des revendications 1 à 15, **caractérisé en ce que** le tensioactif est un tensioactif zwittérionique choisi parmi les composés de formule (V) suivante :
Z⁻-R₈-Z⁺ (V)
dans laquelle :
- R₈ représente une chaîne alkyle en C₁-C₂₀,
- Z⁻ représente une fonction chargée négativement portée par R₈,
- Z⁺ représente une fonction chargée positivement portée par R₈.

21. Procédé selon la revendication 20 **caractérisé en ce que** le tensioactif zwittérionique est choisi parmi le N,N-diméthyldodécylammonium butanate de sodium, le diméthyldodécylammonium propanate de sodium et les acides aminés.

22. Procédé selon l'une quelconque des revendications 1 à 13, **caractérisé en ce que** le tensioactif est non-ionique et est choisi parmi les tensioactifs polyéthoxylés et les polyols.

23. Procédé selon les revendications 1 à 22, **caractérisé en ce que** la quantité de tensioactif est comprise entre 1/20 et 1/150 de la quantité de monomère.

24. Procédé selon les revendications 1 à 23, **caractérisé en ce que** l'amorceur est choisi parmi les amorceurs halogénés, les α-halogénoalkyles possédant des groupement aryle, allyle, carbonyle ou sulfonyle, les composés polyhalogénés comme le CCl₄ ou le CHCl₃, les composés possédant des liaisons covalentes très labiles avec des halogènes, le persulfate de potassium (K₂S₂O₈), l'azobis(isobutyronitrile), les composés peroxydés comme le peroxyde de benzoyle, le peroxyde de *tert*-butyle, le peroxyde de cumyle, le perbenzoate de *tert*-butyle, ou l'hydroperoxyde de *tert*-butyle.

25. Procédé selon les revendications 1 à 24, **caractérisé en ce que** la quantité d'amorceur est comprise entre 1/1000 et 1/20 équivalent de monomère.

26. Kit de préparation d'un film organique copolymérique sur une surface conductrice ou semi-conductrice de l'électricité **caractérisé en ce qu'**il comporte :
- une surface conductrice ou semi-conductrice de l'électricité sur laquelle a été électrogreffé un primaire d'adhésion tel que défini selon la revendication 1,
- une solution comportant les éléments suivants :
- au moins un solvant protique,
- au moins un monomère polymérisable par voie radicalaire ayant une solubilité dans ledit au moins un solvant protique inférieure à 0,1M à 25°C et 1.10⁵ Pa,
- au moins un tensioactif, la concentration en tensioactif étant telle que la concentration micellaire critique (CMC) soit atteinte et qu'il puisse y avoir formation de micelles,
- un amorceur de polymérisation radicalaire.

27. Kit selon la revendication 26, **caractérisé en ce que** la solution et la surface conductrice sont conservées dans le même conditionnement et l'amorceur dans un conditionnement distinct.

## Patentansprüche

1. Verfahren zum Bilden eines organischen Copolymerfilms auf einer elektrisch leitenden oder halbleitenden Oberfläche in zwei Schritten:
a) Elektrolysieren einer elektrolytischen Lösung, die einen Adhäsionsprimer enthält, ausgewählt aus den Aryldiazoniumsalzen der Formel (I):
R-N₂⁺, A⁻ (1)
wobei:
- A für ein einwertiges Anion steht und
- R für eine Arylgruppe steht,
bis sich eine Haftschicht auf der Oberfläche bildet, wobei dieses Elektrolysieren bei einem Reduktionspotential von mindestens gleich dem Reduktionspotential des Adhäsionsprimers durchgeführt wird,
b) Umsetzen, in Gegenwart eines radikalischen Polymerisationsstarters, einer Lösung, umfassend:
- mindestens ein protisches Lösemittel,
- mindestens ein radikalisch polymerisierbares Monomer mit einer Löslichkeit in dem mindestens einen protischen Lösemittel kleiner 0,1 M bei 25 °C und 1.10⁵ Pa,
- mindestens ein oberflächenaktives Mittel, wobei die Konzentration des oberflächenaktiven Mittels derart ist, dass die kritische Mizellbildungskonzentration (CMC) erreicht wird, und dass eine Mizellenbildung stattfinden kann,
auf der Oberfläche, die am Ende von Schritt (a) erhalten wurde.

2. Verfahren nach Anspruch 1, **dadurch gekennzeichnet, dass** die elektrisch leitende oder halbleitende Oberfläche ausgewählt ist aus Edelstahl, Stahl, Eisen, Kupfer, Nickel, Cobalt, Niob, Aluminium, Silber, Titan, Silicium oder Siliciumoxid, Titannitrid, Wolfram, Wolframnitrid, Tantal, Tantalnitrid und Edelmetalloberflächen, bestehend aus mindestens einem Metall, ausgewählt aus Gold, Platin, Iridium und Platin-Iridium.

3. Verfahren nach Anspruch 1 oder 2, **dadurch gekennzeichnet, dass** das Lösemittel der elektrolytischen Lösung ausgewählt ist aus Dimethylformamid, Ethylacetat, Acetonitril, Dimethylsulfoxid, Tetrahydrofuran, protischen Lösemitteln oder einem Gemisch aus zwei oder mehreren dieser Lösemittel.

4. Verfahren nach Anspruch 3, **dadurch gekennzeichnet, dass** das protische Lösemittel vorteilhafterweise ausgewählt ist aus der Gruppe bestehend aus Wasser, Essigsäure, Hydroxy-Lösemitteln, wie Methanol und Ethanol, flüssigen Glykolen mit geringer Molekülmasse und deren Gemischen.

5. Verfahren nach Anspruch 1, **dadurch gekennzeichnet, dass** A ausgewählt ist aus Halogeniden, Halogenboranen, Alkoholaten, Carboxylaten, Perchloraten und Sulfaten.

6. Verfahren nach Anspruch 5, **dadurch gekennzeichnet, dass** das Aryldiazoniumsalz ausgewählt ist aus Phenyldiazoniumtetrafluorborat, 4-Nitrophenyldiazoniumtetrafluorborat, 4-Bromphenyldiazoniumtetrafluorborat, 2-Methyl-4-chlorphenyldiazoniumchlorid, 4-Benzoylbenzoldiazoniumtetrafluorborat, 4-Cyanophenyldiazoniumtetrafluorborat, 4-Carboxyphenyldiazoniumtetrafluorborat, 4-Acetamidphenyldiazoniumtetrafluorborat, 4-Phenylessigsäurediazoniumtetrafluorborat, 2-Methyl-4-[(2-methylphenyl)diazenyl]benzoldiazoniumsulfat, 9,10-Dioxo-9,10-dihydro-1-anthracendiazoniumchlorid, 4-Nitronaphtalindiazoniumtetrafluorborat und Naphtalindiazoniumtetrafluorborat.

7. Verfahren nach den Ansprüchen 1 bis 6, **dadurch gekennzeichnet, dass** die Adhäsionsprimerkonzentration in der Elektrolyselösung im Bereich zwischen 10⁻⁴ und 0,5 M liegt.

8. Verfahren nach den Ansprüchen 1 bis 7, **dadurch gekennzeichnet, dass** es einen Schritt zum Reinigen der am Ende von Schritt (a) erhaltenen Oberfläche umfasst.

9. Verfahren nach den Ansprüchen 1 bis 8, **dadurch gekennzeichnet, dass** das protische Lösemittel aus Schritt (b) ausgewählt ist aus der Gruppe bestehend aus Wasser, Essigsäure, Hydroxy-Lösemitteln, wie Methanol und Ethanol, flüssigen Glykolen mit geringer Molekülmasse und deren Gemischen.

10. Verfahren nach den Ansprüchen 1 bis 9, **dadurch gekennzeichnet, dass** das protische Lösemittel im Gemisch mit einem aprotischen Lösemittel verwendet wird und dadurch, dass das resultierende Gemisch die Eigenschaften eines protischen Lösemittels aufweist.

11. Verfahren nach den Ansprüchen 1 bis 10, **dadurch gekennzeichnet, dass** das radikalisch polymerisierbare Monomer ausgewählt ist aus den Vinylmonomeren.

12. Verfahren nach Anspruch 11, **dadurch gekennzeichnet, dass** das Vinylmonomer ausgewählt ist aus den Monomeren mit der folgenden Formel (II): 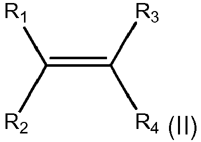 wobei die Gruppen R₁ bis R₄, gleich oder verschieden, für ein einwertiges Nichtmetallatom stehen, wie beispielsweise ein Halogenatom oder ein Wasserstoffatom, oder eine gesättigte oder ungesättigte chemische Gruppe, wie beispielsweise eine Alkyl-, Aryl-Gruppe, eine - COOR₅-Gruppe, wobei R₅ für ein Wasserstoffatom oder eine C₁-C₆-Alkyl-, Nitril-, Carbonyl-, Amin- oder Amidgruppe steht.

13. Verfahren nach Anspruch 12, **dadurch gekennzeichnet, dass** das Vinylmonomer ausgewählt ist aus Vinylacetat, Acrylnitril, Methacrylnitril, Methylmethacrylat, Ethylmethacrylat, Butylmethacrylat, Propylmethacrylat, Hydroxyethylmethacrylat, Hydroxypropylmethacrylat, Glycidylmethacrylat; Crotononitril, Pentennitril, Ethylcrotonat und deren Derivaten; Acrylamiden und insbesondere den Aminoethyl-, Propyl-, Butyl-, Pentyl- und Hexylmethacrylamiden, Cyanoacrylaten, Diacrylaten und Dimethacrylaten, Triacrylaten und Trimethacrylaten, den Tetraacrylaten und Tetramethacrylaten (wie beispielsweise Pentaerythritoltetramethacrylat), Styrol und deren Derivaten, Parachlorstyrol, Pentafluorstyrol, N-Vinylpyrrolidon, 4-Vinylpyridin, 2-Vinylpyridin, Vinyl-, Acryloyl- oder Methacryloylhalogeniden, Divinylbenzol (DVB) und allgemeiner den Vinylvernetzungsmitteln oder auf Acrylat, Methacrylat basierenden Vernetzungsmitteln und deren Derivaten.

14. Verfahren nach den Ansprüchen 1 bis 13, **dadurch gekennzeichnet, dass** die Menge an polymerisierbarem Monomer, die in der Elektrolyselösung vorhanden ist, die 18- bis 40-fache Löslichkeit des Monomers in dem protischen Lösemittel bei einer gegebenen Temperatur darstellt.

15. Verfahren nach den Ansprüchen 1 bis 14, **dadurch gekennzeichnet, dass** die Konzentration des radikalisch polymerisierbaren Monomers im Bereich zwischen 0,1 M und 5 M liegt.

16. Verfahren nach den Ansprüchen 1 bis 15, **dadurch gekennzeichnet, dass** es sich bei dem oberflächenaktiven Mittel um ein anionisches oberflächenaktives Mittel mit der folgenden Formel (III) handelt:
R₆-A⁻, Cat⁺ (III)
wobei:
- R₆ für eine C₁-C₂₀-Aryl- oder Alkylgruppe steht,
- A⁻ ein Anion ist, ausgewählt aus Sulfonaten, Sulfaten, Phosphaten, Carboxylaten und Sulfosuccinaten,
- Cat⁺ ein kationisches Gegenion ist, ausgewählt aus dem Ammoniumion, den quarternären Ammoniumkationen und den alkalischen Kationen.

17. Verfahren nach Anspruch 16, **dadurch gekennzeichnet, dass** das oberflächenaktive Mittel mit der Formel (III) ausgewählt ist aus Tetraethylammoniumparatoluolsulfonat, Natriumdodecylsulfat, Natriumpalmitat, Natriumstearat, Natriummyristat, Natrium-di(2-ethylhexyl)sulfosuccinat, Methylbenzolsulfonat und Ethylbenzolsulfonat.

18. Verfahren nach den Ansprüchen 1 bis 15, **dadurch gekennzeichnet, dass** es sich bei dem oberflächenaktiven Mittel um ein kationisches oberflächenaktives Mittel mit der folgenden Formel (FV) handelt:
(R₇)₄-N⁺, An⁻ (IV)
wobei:
- die Gruppen R₇, gleich oder verschieden, für eine C₁-C₂₀-Alkylkette stehen,
- An⁻ ein anionisches Gegenion ist.

19. Verfahren nach Anspruch 18, **dadurch gekennzeichnet, dass** das kationische oberflächenaktive Mittel ausgewählt ist aus Tetradecyltrimethylammoniumbromid, Alkylpyridiniumhalogeniden, die eine aliphatische C₁-C₁₈-Kette tragen, und Alkylammoniumhalogeniden.

20. Verfahren nach einem der Ansprüche 1 bis 15, **dadurch gekennzeichnet, dass** es sich bei dem oberflächenaktiven Mittel um ein zwitterionisches oberflächenaktives Mittel handelt, ausgewählt aus den Verbindungen mit der folgenden Formel (V):
Z⁻-R₈-Z⁺
wobei:
- R₈ für eine C₁-C₂₀-Alkylkette steht,
- Z⁻ für eine negativ geladene Funktion steht, die von R₈ getragen wird,
- Z⁺ für eine positiv geladene Funktion steht, die von R₈ getragen wird.

21. Verfahren nach Anspruch 20, **dadurch gekennzeichnet, dass** das zwitterionische oberflächenaktive Mittel ausgewählt ist aus N,N-Dimethyldodecylammonium-natriumbutanat, Dimethyldodecylammoniumnatriumpropanat und Aminosäuren.

22. Verfahren nach einem der Ansprüche 1 bis 13, **dadurch gekennzeichnet, dass** das oberflächenaktive Mittel nichtionisch ist und ausgewählt ist aus polyethoxylierten oberflächenaktiven Mitteln und Polyolen.

23. Verfahren nach den Ansprüchen 1 bis 22, **dadurch gekennzeichnet, dass** die Menge an oberflächenaktivem Mittel im Bereich zwischen 1/20 und 1/150 der Monomermenge liegt.

24. Verfahren nach den Ansprüchen 1 bis 23, **dadurch gekennzeichnet, dass** der Starter ausgewählt ist aus halogenierten Startern, α-Halogenalkylen, die Aryl-, Allyl-, Carbonyl- oder Sulfonylgruppen aufweisen, polyhalogenierten Verbindungen, wie CCl₄ oder CHCl₃, Verbindungen, die sehr labile kovalente Bindungen mit den Halogenen aufweisen, Kaliumpersulfat (K₂S₂O₈), Azobis(isobutyronitril), Peroxidverbindungen, wie Benzoylperoxid, *tert*-Butylperoxid, Cumylperoxid, *tert-*Butylperbenzoat oder *tert*-Butylhydroperoxid.

25. Verfahren nach den Ansprüchen 1 bis 24, **dadurch gekennzeichnet, dass** die Menge an Starter im Bereich zwischen 1/1000 und 1/20 Monomeräquivalent liegt.

26. Kit zur Herstellung eines organischen Copolymerfilms auf einer elektrisch leitenden oder halbleitenden Oberfläche, **dadurch gekennzeichnet, dass** es umfasst:
- eine elektrisch leitende oder halbleitende Oberfläche, auf die elektrochemisch ein Adhäsionsprimer gepfropft wurde, wie nach Anspruch 1 definiert,
- eine Lösung, die die folgenden Bestandteile umfasst:
- mindestens ein protisches Lösemittel,
- mindestens ein radikalisch polymerisierbares Monomer mit einer Löslichkeit in dem mindestens einen protischen Lösemittel kleiner 0,1 M bei 25 °C und 1,10⁵ Pa,
- mindestens ein oberflächenaktives Mittel, wobei die Konzentration des oberflächenaktiven Mittels derart ist, dass die kritische Mizellbildungskonzentration (CMC) erreicht wird, und dass eine Mizellenbildung stattfinden kann,
- einen radikalischen Polymerisationsstarter.

27. Kit nach Anspruch 26, **dadurch gekennzeichnet, dass** die Lösung und die leitende Oberfläche in der gleichen Verpackung und der Starter in einer anderen Verpackung aufbewahrt werden.

## Claims

1. Method of forming an organic co-polymer film over a surface that is a conductor or semi-conductor of electricity, in two stages:
a) electrolysis of an electrolytic solution containing an adhesion primer, selected from among the diazonium aryl salts with the formula (I) below:
R-N₂⁺, A⁻ (I)
wherein:
- A represents a monovalent anion and
- R represents an aryl group,
until a priming coat is formed over the surface, said electrolysis being produced with a reduction potential at least equal to the reduction potential of the adhesion primer;
b) a reaction, in the presence of a free-radical polymerisation trigger, of a solution that contains:
- at least one protic solvent,
- at least one monomer that is polymerisable through the free-radicle pathway, with solubility of at least one protic solvent that is less than 0.1M at 25°C and 1.10⁵ Pa,
- at least one surfactant whose concentration is such that its critical micellar concentration (CMC) will be reached, and that the formation of micelles can facilitated,
over the surface obtained upon completion of stage (a).

2. Method according to claim 1, **characterised in that** the conductor or semi-conductor of electricity surface is selected from among stainless steel, steel, iron, copper, nickel, cobalt, niobium, aluminium, silver, titanium, silicon either with or without its oxide, titanium nitride, tungsten, tungsten nitride, tantal, tantal nitride, also noble metal surfaces made from at least one metal, selected from among gold, platinum, iridium and platinum-iridium alloy.

3. Method according to claim 1 or 2, **characterised in that** the solvent of the electrolytic solution is selected from among dimethyl-formamide, ethyl acetate, acetonitrile, dimethyl-sulphoxide, tetrahydrofuran, protic solvents, or a mixture of one or more of those solvents.

4. Method according to claim 3, **characterised in that** the protic solvent will preferably be selected from the group comprising water, acetic acid, hydroxylated solvents such as methanol or ethanol, liquid glycols with a low molecular weight, or mixtures thereof,

5. Method according to claim 1, **characterised in that** A is selected from among the halides, halide borans, alcoholates, carboxylates, perchlorates and sulphates.

6. Method according to claim 5, **characterised in that** the diazonium aryl salt is selected from among phenyl-diazonium tetrafluoroborate, 4-nitrophenyl-diazonium tetrafluoroborate, 4-bromophenyl-diazonium tetrafluoroborate, 2-methyl-4-chlorophenyl-diazonium chloride, 4-benzoylbenzene-diazonium tetrafluoroborate, 4-cyanophenyl-diazonium tetrafluoroborate, 4-carboxyphenyl-diazonium tetrafluoroborate, 4-acetamidophenyl-diazonium tetrafluoroborate, tetrafluoroborate of 4-phenylascetic diazonium acid, 2-methyl-4-[(2-methylphenyl) diazenyl] benzenediazonium sulphate, 9.10-dioxo-9.10-dihydro-1-anthracene-diazonium chloride, 4-nitronaphthalene-diazonium tetrafluoroborate, and naphthalene-diazonium tetrafluoroborate.

7. Method according to claims 1 to 6, **characterised in that** the concentration of the adhesion primer in the electrolytic solution lies within the range 10⁻⁴ and 0.5M.

8. Method according to claims 1 to 7, **characterised in that** it includes a stage of cleaning the surface obtained upon completion of stage (a).

9. Method according to claims 1 to 8, **characterised in that** the protic solvent of stage (b) is selected from the group comprising water, acetic acid, hydroxylated solvents such as methanol and ethanol, liquid glycols with a low molecular weight, and mixtures thereof.

10. Method according to claims 1 to 9, **characterised in that** the protic solvent is used as a mixture together with an aprotic solvent, and **in that** the resulting mixture displays the characteristics of a protic solvent.

11. Method according to claims 1 to 10, **characterised in that** the monomer that is polymerisable through the free-radical pathway is selected from among the vinyl polymers.

12. Method according to claim 11, **characterised in that** the vinyl polymer is selected from among the monomers with the formula (II) below: 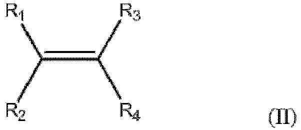 wherein groups R₁ to R₄, which may be either identical or different, represent a non-metal monovalent atom, such as a halogen atom or hydrogen atom, or a saturated or unsaturated chemical such as an alkyl or aryl group, a -COOR⁵ group where R₅ represents a hydrogen atom or an alkyl group in C₁-C₆, either nitrile, carbonyl, amine or amid.

13. Method according to claim 12, **characterised in that** the vinyl monomer is selected from among vinyl acetate, acrylonitrile, methacrylonitrile, methyl methacrylate, ethyl methacrylate, butyl methacrylate, propyl methacrylate, hydroxyethyl methacrylate, hydroxypropyl methcrylate, glycidyl methacrylate; crotonitrile, pentenenitrile, ethyl crotonate or derivatives thereof; acrylamides, including amino-ethyl methacrylamides, propyl, butyl, pentyl and hexyl, cyanoacrylates, di-acrylates and di-methacrylates, tri-acrylates and tri-methacrylates, tetra-acrylates and tetra-methacrylates (such as pentaerythritol tetramethacrylate), styrene or derivatives thereof, parachloro-styrene, pentafluoro-styrene, N-vinyl pyrrolidone, 4-vinyl pyridine, 2-vinyl pyridine, halides of vinyl, acryloyl or methacryloyl, di-vinylbenzene (DVB), also more generally vinyl reticulating agents and those based on acrylate, methacrylate or derivatives thereof.

14. Method according to claims 1 to 13, **characterised in that** the amount of monomer that is polymerisable present in the electrolytic solution represents 18 to 40 times the solubility of that monomer in the protic solvent at a given temperature.

15. Method according to claims 1 to 14, **characterised in that** the concentration of monomer that can be polymerised through the free-radical pathway is within the range 0.1M and 5M.

16. Method according to claims 1 to 15, **characterised in that** the surfactant is an anionic surfactant with the formula (III) below:
R₆-A⁻, Cat⁺ (III)
wherein:
- R₆ represents an aryl or alkyl group in C₁-C₂₀,
- A- is an anion selected from among the sulphonates, sulphates, phosphates, carboxylates and sulphosuccinates,
- Cat⁺ is a cationic counter-ion selected from among ammonium ion, quaternary ammoniums and alkaline cations.

17. Method according to claim 16, **characterised in that** the surfactants of formula (III) are selected from among tetraethylammonium paratoluenesulphonate, sodium dodecylsulphate, sodium palmitate, sodium stearate, sodium myristate, sodium di(2-ethylhexyl)sulphosuccinate, methylbenzene sulphonate and ethylbenzene suplhonate.

18. Method according to claims 1 to 15, **characterised in that** the surfactant is a cationic surfactant with the formula (FV) below:
(R₇)₄-N⁺, An⁻ (IV)
wherein:
- groups R₇, which may be either identical or different, represent an alkyl chain in C₁-C₂₀,
- An⁻ is an anionic counter-ion.

19. Method according to claim 18, **characterised in that** the cationic surfactant is selected from among ammonium tetradecyltrimethyl bromide, alkylpyridinium halides carrying an aliphatic chain in C₁-C₁₈, and alkylammonium halides.

20. Method according to any of claims 1 to 15, **characterised in that** the surfactant is a zwitterionic surfactant selected from among compounds with the formula (V) below:
Z⁻-R₈-Z⁺ (V)
wherein:
- R₈ represents an alkyl chain in C₁-C₂₀,
- Z⁻ represents a negatively-charged function carried by R₈,
- Z⁺ represents a positively-charged function carried by R₈.

21. Method according to claim 20, **characterised in that** the zwitterionic surfactant is selected from among sodium N,N-dimethyldodecylammonium butanate, sodium dimethyldodecylammonium propanate and the amino acids.

22. Method according to any of claims 1 to 13, **characterised in that** the surfactant is non-ionic and is selected from among the polyethoxylated surfactants and polyols.

23. Method according to claims 1 to 22, **characterised in that** the amount of surfactant is within the range of 1/20 and 1/150 of the amount of monomer.

24. Method according to claims 1 to 23, **characterised in that** the trigger is selected from among halogenic triggers, α-halogenic alkyls that possess aryl, allyl, carbonyl or sulphonyl groups; polyhalogenic compounds such as CCl₄ or CHCl₃, compounds that possess highly labile covalent associations with halogens, potassium persulphate (K₂S₂O₈), azobis (isobutyronitrile), peroxide compounds such as benozoyl peroxide, tert-butyl peroxide, cumyl peroxide, tert-butyl perbenzoate and tert-butyl hydroperoxide.

25. Method according to claims 1 to 24, **characterised in that** the amount of the trigger lies within the range 1/1000 and 1/20 of monomer equivalent.

26. Preparation kit for an organic co-polymeric film over a surface that is a conductor or semi-conductor of electricity, **characterised in that** it includes:
- a surface that conducts or semi-conducts electricity, onto which an adhesion primer has been electrically grafted as defined in claim 1,
- a solution containing the following elements:
-- at least one protic solvent,
-- at least one monomer that can be polymerised through the free-radical pathway with solubility of at least one protic solvent that is less than 0.1M at 25°C and 1.10⁵ Pa,
-- at least one surfactant the surfactant concentration being such that the critical micellar concentration (CMC) will be reached, and that the formation of micelles there will be facilitated.
- a trigger of free-radicle polymerisation.

27. Kit according to claim 26, **characterised in that** the solution and conductor surface are kept in the same packaging, and the trigger in separate packaging.
